(19) **Europäisches Patentamt European Patent Office Office européen des brevets**

(11) **EP 4 770 171 A1**

(12) **EUROPEAN PATENT APPLICATION**
published in accordance with Art. 153(4) EPC

(43) Date of publication:
01.07.2026 Bulletin 2026/27

(51) International Patent Classification (IPC):
*H04W 24/02* (2009.01)

(21) Application number: 23949456.0

(22) Date of filing: 24.08.2023

(52) Cooperative Patent Classification (CPC):
H04W 24/02

(86) International application number:
PCT/CN2023/114775

(87) International publication number:
WO 2025/039271 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: HUAWEI TECHNOLOGIES CO., LTD.
Shenzhen 518129 (CN)

(72) Inventors:
• QIAO, Yunfei
  Shenzhen, Guangdong 518129 (CN)
• LI, Rong
  Shenzhen, Guangdong 518129 (CN)

(74) Representative: Maiwald GmbH
Engineering
Elisenhof
Elisenstrasse 3
80335 München (DE)

(54) **MEASUREMENT METHODS AND RELATED APPARATUSES**

(57) This application provides a measurement method and a related apparatus. The method in embodiments of this application includes: A first apparatus receives one or more first measurement signals from a second apparatus. The first apparatus measures the one or more first measurement signals based on one or more first air interface configurations, to obtain one or more first measurement results, where the one or more first measurement results represent performance of a first-type air interface configured based on the one or more first air interface configurations. The first apparatus sends the one or more first measurement results to the second apparatus. In this way, the one or more first measurement results represent the performance of the first-type air interface configured based on the one or more first air interface configurations, to help select an appropriate first-type air interface for the first apparatus.

FIG. 5

**Description**

## TECHNICAL FIELD

This application relates to the field of communication technologies, and in particular, to a measurement method and a related apparatus.

## BACKGROUND

To cope with the vision of intelligence and inclusiveness in the future, intelligence further evolves at a wireless network architecture level. Artificial intelligence (artificial intelligence, AI) is further integrated with a wireless network deeply to achieve endogenous network intelligence and include terminal device intelligence. For example, terminal types are diversified, and terminal device connections are more flexible and intelligent. A terminal device has a specific AI capability. In addition to a conventional communication connection service, the network further provides computing and AI services to better support inclusive, real-time, and highly secure AI services.

Currently, in wireless communication, a neural network is proposed to optimize a channel coding module, a modulation module, a waveform processing module, and other modules at a physical layer. This may change components of existing processing modules at the physical layer, for example, a joint channel coding and modulation module and a predistortion processing module; and may also change an existing signal processing mode, for example, pilot-free modulation. Therefore, a conventional air interface and an air interface implemented based on AI may coexist in a future network.

However, how to measure performance of air interfaces implemented based on AI, to select, for a terminal device, an appropriate air interface implemented based on AI is a problem worth considering.

## SUMMARY

This application provides a measurement method and a related apparatus, so that a first apparatus can measure one or more first measurement signals based on one or more first air interface configurations, to obtain one or more first measurement results. The first apparatus sends the one or more first measurement results to a second apparatus. In this way, the one or more first measurement results represent performance of a first-type air interface configured based on the one or more first air interface configurations, to help select an appropriate first-type air interface for the first apparatus.

A first aspect of this application provides a measurement method. The method may be performed by a first apparatus. The first apparatus may be a terminal device or a network device, or a component (for example, a processor, a chip, or a chip system) in a terminal device or a network device, or a logic module or software that can implement all or some functions of a terminal device, or a logic module or software that can implement all or some functions of a network device. The method includes:

A first apparatus receives one or more first measurement signals from a second apparatus. The first apparatus measures the one or more first measurement signals based on one or more first air interface configurations, to obtain one or more first measurement results, where the one or more first measurement results represent performance of a first-type air interface configured based on the one or more first air interface configurations. The first apparatus sends the one or more first measurement results to the second apparatus.

It can be learned from the foregoing technical solutions that the first apparatus can measure the one or more first measurement signals based on the one or more first air interface configurations, to obtain the one or more first measurement results. The first apparatus sends the one or more first measurement results to the second apparatus. In this way, the one or more first measurement results represent the performance of the first-type air interface configured based on the one or more first air interface configurations, to help the second apparatus configure an appropriate first-type air interface for the first apparatus, so as to establish the first-type air interface between the first apparatus and the second apparatus.

A second aspect of this application provides a measurement method. The method may be performed by a second apparatus. The second apparatus may be a terminal device or a network device, or a component (for example, a processor, a chip, or a chip system) in a terminal device or a network device, or a logic module or software that can implement all or some functions of a terminal device, or a logic module or software that can implement all or some functions of a network device. The method includes:

A second apparatus sends one or more first measurement signals to a first apparatus. The second apparatus receives one or more first measurement results from the first apparatus, where the one or more first measurement results are obtained by measuring the one or more first measurement signals based on one or more first air interface configurations, and the one or more first measurement results represent performance of a first-type air interface configured based on the one or more first air interface configurations.

In the foregoing technical solution, the second apparatus sends the one or more first measurement signals to the first apparatus. Then, the second apparatus receives the one or more first measurement results from the first apparatus. The one or more first measurement results represent the performance of the first-type air interface configured based on the one or more first air interface configurations, to help the second apparatus configure an appropriate first-type air interface for the first apparatus, so as to establish the first-type air interface between the first apparatus and the second apparatus.

Based on the first aspect or the second aspect, in a possible implementation, each first-type air interface includes one or more functional modules, the one or more functional modules include at least one of the following: a channel decoding module, a symbol demodulation module, a resource demapping module, a waveform demodulation module, a radio frequency processing module, a scheduler module, or an encryption/decryption module, and at least one function mode in the one or more functional modules is implemented based on artificial intelligence (artificial intelligence, AI). In this implementation, the first-type air interface is defined, in other words, the at least one function mode in the one or more functional modules of the first-type air interface is implemented based on AI.

Based on the first aspect or the second aspect, in a possible implementation, the one or more first measurement signals correspond to the one or more first air interface configurations, and a first measurement result corresponding to each first measurement signal is obtained through measurement based on a first air interface configuration corresponding to the first measurement signal. In this implementation, each first measurement signal has a corresponding first air interface configuration, so that performance of the first-type air interface configured based on the first air interface configuration is determined by measuring the first measurement signal. This helps the second apparatus select an appropriate first-type air interface for the first apparatus.

Based on the first aspect, in a possible implementation, the one or more first measurement signals include a first target measurement signal. That the first apparatus measures the one or more first measurement signals based on the one or more first air interface configurations, to obtain the one or more first measurement results includes: The first apparatus receives the first target measurement signal through a first-type air interface configured based on a first air interface configuration corresponding to the first target measurement signal; and the first apparatus determines, based on the first target measurement signal, a first measurement result corresponding to the first target measurement signal. In this implementation, a process in which the first apparatus measures the first target measurement signal and determines the first measurement result corresponding to the first target measurement signal is shown. This facilitates implementation of the solution.

Based on the first aspect, in a possible implementation, the first measurement result includes a similarity between the first target measurement signal received by the first apparatus and a first target measurement signal pre-agreed on between the first apparatus and the second apparatus, and/or includes a bit error rate of a data packet carried in the first target measurement signal received by the first apparatus. In this implementation, content of two possible forms included in the first measurement result is shown. In this way, the performance of the first-type air interface configured based on the first air interface configuration corresponding to the first target measurement signal is represented by the first measurement result.

Based on the first aspect, in a possible implementation, the method further includes: The first apparatus receives one or more pieces of first indication information from the second apparatus, where the one or more pieces of first indication information correspond to the one or more first measurement signals, each piece of first indication information indicates a first air interface configuration corresponding to a first measurement signal corresponding to the first indication information, and the first air interface configuration corresponding to the first measurement signal is used to measure the first measurement signal. In this implementation, the first apparatus may further receive the one or more pieces of first indication information, to determine a first air interface configuration corresponding to each first measurement signal. In this way, the first apparatus measures the first measurement signal through the corresponding first air interface configuration, to obtain a corresponding measurement result.

Based on the second aspect, in a possible implementation, the method further includes: The second apparatus sends one or more pieces of first indication information to the first apparatus, where the one or more pieces of first indication information correspond to the one or more first measurement signals, each piece of first indication information indicates a first air interface configuration corresponding to a first measurement signal corresponding to the first indication information, and the first air interface configuration corresponding to the first measurement signal is used to measure the first measurement signal. This helps the first apparatus determine a first air interface configuration corresponding to each first measurement signal. In this way, the first apparatus measures the first measurement signal through the corresponding first air interface configuration, to obtain a corresponding measurement result.

Based on the first aspect or the second aspect, in a possible implementation, the one or more pieces of first indication information are carried in measurement control information.

Based on the first aspect or the second aspect, in a possible implementation, the measurement control information is carried in a radio resource control (radio resource control, RRC) message. In this way, a new message does not need to be defined. This helps improve compatibility and practicability of the solution. For example, the measurement control information is carried in an RRC reconfiguration message.

Based on the first aspect, in a possible implementation, after the first apparatus sends the one or more first measurement results to the second apparatus, the method further includes: The first apparatus receives second indication information from the second apparatus, where the second indication information is used to activate at least one first air interface configuration in the one or more first air interface configurations. In this way, the second apparatus selects the appropriate first-type air interface for the first apparatus. This helps the first apparatus establish the first-type air interface with the second apparatus based on the activated first air interface configuration, thereby improving performance of transmission between the first apparatus and the second apparatus.

Based on the second aspect, in a possible implementation, the method further includes: The second apparatus sends second indication information to the first apparatus, where the second indication information is used to activate at least one first air interface configuration in the one or more first air interface configurations. In this way, the second apparatus selects the appropriate first-type air interface for the first apparatus. This helps the first apparatus establish the first-type air interface with the second apparatus based on the activated first air interface configuration, thereby improving performance of transmission between the first apparatus and the second apparatus.

Based on the first aspect or the second aspect, in a possible implementation, the at least one first air interface configuration includes a plurality of first air interface configurations, and the second indication information further includes priorities of the plurality of first air interface configurations. This helps the first apparatus select an appropriate first air interface configuration. For example, the first apparatus may select a first air interface configuration with a high priority to establish the first-type air interface with the second apparatus, thereby improving performance of transmission between the first apparatus and the second apparatus.

Based on the first aspect or the second aspect, in a possible implementation, the second indication information is carried in a media access control control element (media access control control element, MAC CE).

Based on the first aspect or the second aspect, in a possible implementation, the second indication information is a bit sequence, a bit in the bit sequence corresponds to the one or more first air interface configurations, and a value of the bit in the bit sequence indicates whether to activate the first air interface configuration corresponding to the bit. In this implementation, the second indication information may be implemented via the bit sequence, to activate the corresponding first air interface configuration.

Based on the first aspect or the second aspect, in a possible implementation, one bit in the bit sequence corresponds to one first air interface configuration in the one or more first air interface configurations, and different bits in the bit sequence correspond to different first air interface configurations. When a value of a bit in the bit sequence is 0, it indicates that a first air interface configuration corresponding to the bit is in a candidate state; or when a value of a bit in the bit sequence is 1, it indicates that a first air interface configuration corresponding to the bit is in an active state. Alternatively, when a value of a bit in the bit sequence is 0, it indicates that a first air interface configuration corresponding to the bit is in an active state; or when a value of a bit in the bit sequence is 1, it indicates that a first air interface configuration corresponding to the bit is in a candidate state. In this implementation, one bit in the bit sequence corresponds to one first air interface configuration, and a status of the first air interface configuration is indicated by a value of the bit, to activate the corresponding first air interface configuration.

Based on the first aspect, in a possible implementation, the at least one first air interface configuration includes a first air interface configuration 1. The method further includes: The first apparatus establishes a first-type air interface with the second apparatus based on the first air interface configuration 1. This helps improve performance of transmission between the first apparatus and the second apparatus.

Based on the first aspect, in a possible implementation, the method further includes: The first apparatus receives a second measurement signal from the second apparatus.

The first apparatus measures the second measurement result based on a first air interface configuration 2 that is in a candidate state and that is indicated by the second indication information, to obtain a second measurement result, where the second measurement result represents that performance of a first-type air interface configured based on the first air interface configuration 2 is greater than or equal to a first threshold. The first apparatus sends the second measurement result to the second apparatus. The first apparatus receives third indication information from the second apparatus, where the third indication information is used to activate the first air interface configuration 2. The first apparatus establishes a first-type air interface with the second apparatus based on the first air interface configuration 2. In this implementation, the first apparatus can determine, by measuring the second measurement signal, the second measurement result corresponding to the second measurement signal, and send the second measurement result to the second apparatus. In this way, the second apparatus reselects a first air interface configuration for the first apparatus based on the third indication information. This helps timely update the first air interface configuration used by the first apparatus, thereby improving performance of transmission between the first apparatus and the second apparatus.

Based on the second aspect, in a possible implementation, the first apparatus establishes a first-type air interface with the second apparatus based on a first air interface configuration 1 activated via the second indication information. The method further includes: The second apparatus generates a second measurement signal. The second apparatus sends the second measurement signal to the first apparatus. The second apparatus receives a second measurement result from the first apparatus, where the second measurement result is obtained through measurement based on a first air interface configuration 2, and the second measurement result represents that performance of a first-type air interface configured based on the first air interface configuration 2 is greater than or equal to a first threshold. The second apparatus sends third indication information to the first apparatus, where the third indication information is used to activate the first air interface configuration 2. In this way, the second apparatus reselects a first air interface configuration for the first apparatus based on the third indication information. This helps timely update the first air interface configuration used by the first apparatus, thereby improving performance of transmission between the first apparatus and the second apparatus.

Based on the first aspect, in a possible implementation, the method further includes: The first apparatus receives fourth indication information from the second apparatus, where the fourth indication information indicates one first air interface configuration in the first air interface configuration activated via the second indication information, or the fourth indication information indicates the first apparatus to establish a connection to the second apparatus through a second-type air interface, or the fourth indication information indicates to reselect a first air interface configuration from the first air interface configuration activated via the second indication information. The first apparatus establishes a first-type air interface with the second apparatus based on the first air interface configuration indicated by the fourth indication information, or the first apparatus establishes a second-type air interface with the second apparatus, or the first apparatus establishes a first-type air interface with the second apparatus based on the first air interface configuration reselected by the first apparatus. In this implementation, the first apparatus receives the fourth indication information from the second apparatus. In this way, the second apparatus reselects a first air interface configuration for the first apparatus based on the fourth indication information. This helps timely update the first air interface configuration used by the first apparatus, thereby improving performance of transmission between the first apparatus and the second apparatus.

Based on the second aspect, in a possible implementation, the method further includes: The second apparatus sends fourth indication information to the first apparatus, where the fourth indication information indicates one first air interface configuration in the first air interface configuration activated via the second indication information, or the fourth indication information indicates the first apparatus to establish a connection to the second apparatus through a second-type air interface, or the fourth indication information indicates to reselect a first air interface configuration from the first air interface configuration activated via the second indication information. In this way, the second apparatus reselects a first air interface configuration for the first apparatus. This helps timely update the first air interface configuration used by the first apparatus, thereby improving performance of transmission between the first apparatus and the second apparatus.

Based on the first aspect or the second aspect, in a possible implementation, the fourth indication information is carried in first downlink control information (downlink control information, DCI).

Based on the first aspect or the second aspect, in a possible implementation, the fourth indication information is a first field in the first DCI. A value of the first field indicates a corresponding first air interface configuration, or indicates the first apparatus to fall back to establishing a connection to the second apparatus through a second-type air interface, or indicates to reselect a first air interface configuration from the first air interface configuration activated via the second indication information.

Based on the first aspect or the second aspect, in a possible implementation, the first DCI further includes a time/frequency domain resource allocation, and the time/frequency domain resource allocation indicates a time-frequency resource location that is occupied by the first-type air interface and that is indicated by the fourth indication information.

Based on the first aspect or the second aspect, in a possible implementation, the first DCI further includes a switching time offset, and the switching time offset indicates an effective time that is of the first-type air interface and that is indicated by the fourth indication information.

Based on the first aspect, in a possible implementation, the method further includes: The first apparatus detects the first DCI when performance of the first-type air interface configured based on the first air interface configuration 1 is less than the first threshold. This avoids keeping detecting the first DCI, thereby reducing power consumption of DCI detection of the first apparatus.

Based on the first aspect, in a possible implementation, the method further includes: The first apparatus receives a trigger signal from the second apparatus, where the trigger signal is used to trigger the first apparatus to detect the first DCI. The first apparatus detects the first DCI. In this way, the first apparatus detects the first DCI only after receiving the trigger signal, thereby reducing power consumption of DCI detection of the first apparatus.

Based on the second aspect, in a possible implementation, the method further includes: The second apparatus sends a trigger signal to the first apparatus, where the trigger signal is used to trigger the first apparatus to detect the first DCI. This helps reduce power consumption of DCI detection of the first apparatus.

Based on the first aspect or the second aspect, in a possible implementation, each first-type air interface includes one or more functional modules, and the one or more first air interface configurations include one or more sets of model parameters corresponding to each functional module that is in the one or more functional modules and that is implemented based on AI. Content included in the one or more first air interface configurations is shown, and may be specifically one or more sets of model parameters corresponding to each functional module. This helps the second apparatus select, for the first apparatus based on the one or more first measurement results, the model parameter used by each functional module.

Based on the first aspect or the second aspect, in a possible implementation, the one or more first air interface configurations further include one or more sets of related parameters corresponding to each functional module that is in the one or more functional modules and that is implemented based on non-AI. This helps the second apparatus select, for the first apparatus, the parameter used by the functional module implemented based on non-AI.

Based on the first aspect, in a possible implementation, the method further includes: The first apparatus receives fifth indication information and/or sixth indication information from the second apparatus, where the fifth indication information indicates whether each functional module in the one or more functional modules is implemented based on AI, and the sixth indication information indicates the model parameter used by the functional module that is in the one or more functional modules and that is implemented based on AI. In this way, the second apparatus flexibly selects, for the first apparatus, the functional module implemented based on AI and the model parameter used by each functional module. This solution is highly flexible, and helps the second apparatus configure an appropriate air interface for the first apparatus based on an actual situation, thereby improving performance of transmission between the first apparatus and the second apparatus.

Based on the second aspect, in a possible implementation, the method further includes: The second apparatus sends fifth indication information and/or sixth indication information to the first apparatus, where the fifth indication information indicates whether each functional module in the one or more functional modules is implemented based on AI, and the sixth indication information indicates the model parameter used by the functional module that is in the one or more functional modules and that is implemented based on AI. In this way, the second apparatus flexibly selects, for the first apparatus, the functional module implemented based on AI and the model parameter used by each functional module. This solution is highly flexible, and helps the second apparatus configure an appropriate air interface for the first apparatus based on an actual situation, thereby improving performance of transmission between the first apparatus and the second apparatus.

Based on the first aspect or the second aspect, in a possible implementation, the fifth indication information and the sixth indication information are carried in second DCI. This helps the first apparatus determine, based on the fifth indication information and the sixth indication information, which functional modules in the one or more functional modules are implemented based on AI, and the parameter used by each functional module in the one or more functional modules.

Based on the first aspect or the second aspect, in a possible implementation, the fifth indication information is a first field in the second DCI. A length of the first field is equal to a quantity M of functional modules in the one or more functional modules, one bit in the first field corresponds to one functional module, and a value of the bit indicates whether the functional module corresponding to the bit is implemented based on AI.

Alternatively, the one or more functional modules are divided into R module groups, a length of the first field is $P = \lceil \log_2(R) \rceil$, one bit in the first field corresponds to one module group, a value of the bit indicates whether the module group is implemented based on AI, and R is an integer greater than or equal to 1.

The foregoing shows some possible implementations of the first field, and the solution is more comprehensive and diversified. The length of the first field may be determined with reference to a specific implementation. In some of the implementations, signaling overheads can be reduced, and in some of the implementations, the solution can be simplified.

A third aspect of this application provides a first apparatus, including:

a transceiver module, configured to receive one or more first measurement signals from a second apparatus; and a processing module, configured to measure the one or more first measurement signals based on one or more first air interface configurations, to obtain one or more first measurement results, where the one or more first measurement results represent performance of a first-type air interface configured based on the one or more first air interface configurations.

The transceiver module is further configured to send the one or more first measurement results to the second apparatus.

A fourth aspect of this application provides a second apparatus, including:

a transceiver module, configured to: send one or more first measurement signals to a first apparatus; and receive one or more first measurement results from the first apparatus, where the one or more first measurement results are obtained by measuring the one or more first measurement signals based on one or more first air interface configurations, and the one or more first measurement results represent performance of a first-type air interface configured based on the one or more first air interface configurations.

Based on the third aspect or the fourth aspect, in a possible implementation, each first-type air interface includes one or more functional modules, the one or more functional modules include at least one of the following: a channel decoding module, a symbol demodulation module, a resource demapping module, a waveform demodulation module, a radio frequency processing module, a scheduler module, or an encryption/decryption module, and at least one function mode in the one or more functional modules is implemented based on AI.

Based on the third aspect or the fourth aspect, in a possible implementation, the one or more first measurement signals correspond to the one or more first air interface configurations, and a first measurement result corresponding to each first measurement signal is obtained through measurement based on a first air interface configuration corresponding to the first measurement signal.

Based on the third aspect or the fourth aspect, in a possible implementation, the one or more first measurement signals include a first target measurement signal. A processing module is specifically configured to: receive the first target measurement signal through a first-type air interface configured based on a first air interface configuration corresponding to the first target measurement signal; and determine, based on the first target measurement signal, a first measurement result corresponding to the first target measurement signal.

Based on the third aspect or the fourth aspect, in a possible implementation, the first measurement result includes a similarity between the first target measurement signal received by the first apparatus and a first target measurement signal pre-agreed on between the first apparatus and the second apparatus, and/or includes a bit error rate of a data packet carried in the first target measurement signal received by the first apparatus.

Based on the third aspect, in a possible implementation, the transceiver module is further configured to receive one or more pieces of first indication information from the second apparatus, where the one or more pieces of first indication information correspond to the one or more first measurement signals, each piece of first indication information indicates a first air interface configuration corresponding to a first measurement signal corresponding to the first indication information, and the first air interface configuration corresponding to the first measurement signal is used to measure the first measurement signal.

Based on the fourth aspect, in a possible implementation, the transceiver module is further configured to send one or more pieces of first indication information to the first apparatus, where the one or more pieces of first indication information correspond to the one or more first measurement signals, each piece of first indication information indicates a first air interface configuration corresponding to a first measurement signal corresponding to the first indication information, and the first air interface configuration corresponding to the first measurement signal is used to measure the first measurement signal.

Based on the third aspect or the fourth aspect, in a possible implementation, the one or more pieces of first indication information are carried in measurement control information.

Based on the third aspect or the fourth aspect, in a possible implementation, the measurement control information is carried in an RRC message.

Based on the third aspect, in a possible implementation, the transceiver module is further configured to receive second indication information from the second apparatus, where the second indication information is used to activate at least one first air interface configuration in the one or more first air interface configurations.

Based on the fourth aspect, in a possible implementation, the transceiver module is further configured to send second indication information to the first apparatus, where the second indication information is used to activate at least one first air interface configuration in the one or more first air interface configurations.

Based on the third aspect or the fourth aspect, in a possible implementation, the at least one first air interface configuration includes a plurality of first air interface configurations, and the second indication information further includes priorities of the plurality of first air interface configurations.

Based on the third aspect or the fourth aspect, in a possible implementation, the second indication information is carried in a MAC CE.

Based on third aspect or the fourth aspect, in a possible implementation, the second indication information is a bit sequence, a bit in the bit sequence corresponds to the one or more first air interface configurations, and a value of the bit in the bit sequence indicates whether to activate the first air interface configuration corresponding to the bit.

Based on the third aspect or the fourth aspect, in a possible implementation, one bit in the bit sequence corresponds to one first air interface configuration in the one or more first air interface configurations, and different bits in the bit sequence correspond to different first air interface configurations. When a value of a bit in the bit sequence is 0, it indicates that a first air interface configuration corresponding to the bit is in a candidate state; or when a value of a bit in the bit sequence is 1, it indicates that a first air interface configuration corresponding to the bit is in an active state. Alternatively, when a value of a bit in the bit sequence is 0, it indicates that a first air interface configuration corresponding to the bit is in an active state; or when a value of a bit in the bit sequence is 1, it indicates that a first air interface configuration corresponding to the bit is in a candidate state.

Based on the third aspect, in a possible implementation, the at least one first air interface configuration includes a first air interface configuration 1. The transceiver module is further configured to establish a first-type air interface with the second apparatus based on the first air interface configuration 1.

Based on the third aspect, in a possible implementation, the transceiver module is further configured to receive a second measurement signal from the second apparatus.

The processing module is further configured to measure the second measurement result based on a first air interface configuration 2 that is in a candidate state and that is indicated by the second indication information, to obtain a second measurement result, where the second measurement result represents that performance of a first-type air interface configured based on the first air interface configuration 2 is greater than or equal to a first threshold.

The transceiver module is further configured to: send the second measurement result to the second apparatus; and receive third indication information from the second apparatus, where the third indication information is used to activate the first air interface configuration 2.

The processing module is further configured to establish a first-type air interface with the second apparatus based on the first air interface configuration 2.

Based on the fourth aspect, in a possible implementation, the first apparatus establishes a first-type air interface with the second apparatus based on a first air interface configuration 1 activated via the second indication information. The second apparatus further includes the processing module. The processing module is configured to generate a second measurement signal. The transceiver module is further configured to: send the second measurement signal to the first apparatus; receive a second measurement result from the first apparatus, where the second measurement result is obtained through measurement based on a first air interface configuration 2, and the second measurement result represents that performance of a first-type air interface configured based on the first air interface configuration 2 is greater than or equal to a first threshold; and send third indication information to the first apparatus, where the third indication information is used to activate the first air interface configuration 2.

Based on the third aspect, in a possible implementation, the transceiver module is further configured to receive fourth indication information from the second apparatus, where the fourth indication information indicates one first air interface configuration in the first air interface configuration activated via the second indication information, or the fourth indication information indicates the first apparatus to establish a connection to the second apparatus through a second-type air interface, or the fourth indication information indicates to reselect a first air interface configuration from the first air interface configuration activated via the second indication information. The processing module is further configured to: establish a first-type air interface with the second apparatus based on the first air interface configuration indicated by the fourth indication information, or establish a second-type air interface with the second apparatus, or establish a first-type air interface with the second apparatus based on the first air interface configuration reselected by the first apparatus.

Based on the fourth aspect, in a possible implementation, the transceiver module is further configured to send fourth indication information to the first apparatus, where the fourth indication information indicates one first air interface configuration in the first air interface configuration activated via the second indication information, or the fourth indication information indicates the first apparatus to establish a connection to the second apparatus through a second-type air interface, or the fourth indication information indicates to reselect a first air interface configuration from the first air interface configuration activated via the second indication information.

Based on the third aspect or the fourth aspect, in a possible implementation, the fourth indication information is carried in first DCI.

Based on the third aspect or the fourth aspect, in a possible implementation, the fourth indication information is a first field in the first DCI. A value of the first field indicates a corresponding first air interface configuration, or indicates the first apparatus to fall back to establishing a connection to the second apparatus through a second-type air interface, or indicates to reselect a first air interface configuration from the first air interface configuration activated via the second indication information.

Based on the third aspect or the fourth aspect, in a possible implementation, the first DCI further includes a time/frequency domain resource allocation, and the time/frequency domain resource allocation indicates a time-frequency resource location that is occupied by the first-type air interface and that is indicated by the fourth indication information.

Based on the third aspect or the fourth aspect, in a possible implementation, the first DCI further includes a switching time offset, and the switching time offset indicates an effective time that is of the first-type air interface and that is indicated by the fourth indication information.

Based on the third aspect, in a possible implementation, the processing module is further configured to detect the first DCI when performance of the first-type air interface configured based on the first air interface configuration 1 is less than the first threshold.

Based on the third aspect, in a possible implementation, the transceiver module is further configured to receive a trigger signal from the second apparatus, where the trigger signal is used to trigger the first apparatus to detect the first DCI. The processing module is further configured to detect the first DCI.

Based on the fourth aspect, in a possible implementation, the transceiver module is further configured to send a trigger signal to the first apparatus, where the trigger signal is used to trigger the first apparatus to detect the first DCI.

Based on the third aspect or the fourth aspect, in a possible implementation, each first-type air interface includes one or more functional modules, and the one or more first air interface configurations include one or more sets of model parameters corresponding to each functional module that is in the one or more functional modules and that is implemented based on AI.

Based on the third aspect or the fourth aspect, in a possible implementation, the one or more first air interface configurations further include one or more sets of related parameters corresponding to each functional module that is in the one or more functional modules and that is implemented based on non-AI.

Based on the third aspect, in a possible implementation, the transceiver module is further configured to receive fifth indication information and/or sixth indication information from the second apparatus, where the fifth indication information indicates whether each functional module in the one or more functional modules is implemented based on AI, and the sixth indication information indicates the model parameter used by the functional module that is in the one or more functional modules and that is implemented based on AI.

Based on the fourth aspect, in a possible implementation, the transceiver module is further configured to send fifth indication information and sixth indication information to the first apparatus, where the fifth indication information indicates whether each functional module in the one or more functional modules is implemented based on AI, and the sixth indication information indicates the model parameter used by the functional module that is in the one or more functional modules and that is implemented based on AI.

Based on the third aspect or the fourth aspect, in a possible implementation, the fifth indication information and the sixth indication information are carried in second DCI.

Based on the third aspect or the fourth aspect, in a possible implementation, the fifth indication information is a first field in the second DCI. A length of the first field is equal to a quantity M of functional modules in the one or more functional modules, one bit in the first field corresponds to one functional module, and a value of the bit indicates whether the functional module corresponding to the bit is implemented based on AI.

Alternatively, the one or more functional modules are divided into R module groups, a length of the first field is $P = \lceil \log_2(R) \rceil$, one bit in the first field corresponds to one module group, a value of the bit indicates whether the module group is implemented based on AI, and R is an integer greater than or equal to 1.

Optionally, for beneficial effect of the third aspect and the possible implementations of the third aspect, refer to related descriptions of beneficial effect of the first aspect and the possible implementations of the first aspect. Details are not described herein again.

Optionally, for beneficial effect of the fourth aspect and the possible implementations of the fourth aspect, refer to related descriptions of beneficial effect of the second aspect and the possible implementations of the second aspect. Details are not described herein again.

A fifth aspect of this application provides a first apparatus. The first apparatus includes a processor and a memory. The memory stores a computer program or computer instructions, and the processor is configured to invoke and run the computer program or the computer instructions stored in the memory, to enable the processor to implement any one of the implementations of the first aspect.

Optionally, the first apparatus further includes a transceiver, and the processor is configured to control the transceiver to receive or send a signal.

A sixth aspect of this application provides a second apparatus. The second apparatus includes a processor and a memory. The memory stores a computer program or computer instructions, and the processor is configured to invoke and run the computer program or the computer instructions stored in the memory, to enable the processor to implement any one of the implementations of the second aspect.

Optionally, the second apparatus further includes a transceiver, and the processor is configured to control the transceiver to receive or send a signal.

A seventh aspect of this application provides a first apparatus, including a processor and an interface circuit. The processor is configured to: communicate with another apparatus through the interface circuit, and perform the method in the first aspect. There are one or more processors.

An eighth aspect of this application provides a second apparatus, including a processor and an interface circuit. The processor is configured to: communicate with another apparatus through the interface circuit, and perform the method in the second aspect. There are one or more processors.

A ninth aspect of this application provides a first apparatus, including a processor, configured to: connect to a memory, and invoke a program stored in the memory, to perform the method in the first aspect. The memory may be located inside the first apparatus, or may be located outside the first apparatus. In addition, there are one or more processors.

A tenth aspect of this application provides a second apparatus, including a processor, configured to: connect to a memory, and invoke a program stored in the memory, to perform the method in the second aspect. The memory may be located inside the second apparatus, or may be located outside the second apparatus. In addition, there are one or more processors.

In an implementation, the first apparatus in the third aspect, the fifth aspect, the seventh aspect, or the ninth aspect may be a chip or a chip system.

In an implementation, the second apparatus in the fourth aspect, the sixth aspect, the eighth aspect, or the tenth aspect may be a chip or a chip system.

An eleventh aspect of this application provides a computer program product including computer instructions. When the computer program product runs on a computer, the computer is enabled to perform any one of the implementations of either the first aspect or the second aspect.

A twelfth aspect of this application provides a computer-readable storage medium, including computer instructions. When the instructions are run on a computer, the computer is enabled to perform any one of the implementations of either the first aspect or the second aspect.

A thirteenth aspect of this application provides a chip apparatus, including a processor, configured to invoke a computer program or computer instructions in a memory, to enable the processor to perform any one of the implementations of either the first aspect or the second aspect.

Optionally, the processor is coupled to the memory through an interface.

A fourteenth aspect of this application provides a communication system. The communication system includes a first apparatus and a second apparatus. The first apparatus is configured to perform the method shown in the first aspect, and the second apparatus is configured to perform the method shown in the second aspect.

According to the foregoing technical solutions, the first apparatus receives the one or more first measurement signals from the second apparatus. Then, the first apparatus measures the one or more first measurement signals based on one or more first air interface configurations, to obtain one or more first measurement results. The one or more first measurement results represent performance of a first-type air interface configured based on the one or more first air interface configurations. The first apparatus sends the one or more first measurement results to the second apparatus. It can be learned that the first apparatus can measure the one or more first measurement signals based on the one or more first air interface configurations, to obtain the one or more first measurement results. The first apparatus sends the one or more first measurement results to the second apparatus. In this way, the one or more first measurement results represent the performance of the first-type air interface configured based on the one or more first air interface configurations, to help the second apparatus configure an appropriate first-type air interface for the first apparatus, so as to establish the first-type air interface between the first apparatus and the second apparatus.

## BRIEF DESCRIPTION OF DRAWINGS

FIG. 1 is a diagram of a communication system according to an embodiment of this application;
FIG. 2A is another diagram of a communication system according to an embodiment of this application;
FIG. 2B is still another diagram of a communication system according to an embodiment of this application;
FIG. 2C is yet another diagram of a communication system according to an embodiment of this application;
FIG. 3 is a diagram of an air interface processing process at a physical layer from a perspective of a transmit end device according to an embodiment of this application;
FIG. 4 is a diagram of an air interface processing process at a physical layer from a perspective of a receive end device according to an embodiment of this application;
FIG. 5 is a diagram of an embodiment of a measurement method according to an embodiment of this application;
FIG. 6 is a diagram of another embodiment of a measurement method according to an embodiment of this application;
FIG. 7 is a diagram of an octet Oct 1 in a MAC CE according to an embodiment of this application;
FIG. 8 is a diagram of still another embodiment of a measurement method according to an embodiment of this application;
FIG. 9 is a diagram of yet another embodiment of a measurement method according to an embodiment of this application;
FIG. 10 is a diagram of a structure of a first apparatus according to an embodiment of this application;
FIG. 11 is a diagram of a structure of a second apparatus according to an embodiment of this application;
FIG. 12 is a diagram of a structure of an apparatus according to an embodiment of this application;
FIG. 13 is a diagram of another structure of an apparatus according to an embodiment of this application; and
FIG. 14 is a diagram of still another structure of an apparatus according to an embodiment of this application.

## DESCRIPTION OF EMBODIMENTS

Embodiments of this application provide a measurement method and a related apparatus, so that a first apparatus can measure one or more first measurement signals based on one or more first air interface configurations, to obtain one or more first measurement results. The first apparatus sends the one or more first measurement results to a second apparatus. In this way, the one or more first measurement results represent performance of a first-type air interface configured based on the one or more first air interface configurations, to help the second apparatus select an appropriate first air interface configuration for the first apparatus, so as to establish, between the first apparatus and the second apparatus, the first-type air interface configured based on the first air interface configuration.

The following clearly and completely describes technical solutions in embodiments of this application with reference to accompanying drawings in embodiments of this application. It is clear that the described embodiments are merely a part rather than all of embodiments of this application. All other embodiments obtained by a person skilled in the art based on embodiments of this application without creative efforts shall fall within the protection scope of this application.

Reference to "an embodiment", "some embodiments", or the like described in this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

In descriptions of this application, unless otherwise specified, "/" means "or". For example, A/B may indicate A or B. A term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

It may be understood that, in this application, an "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner of directly indicating the to-be-indicated information, for example, the to-be-indicated information itself or an index of the to-be-indicated information, or a manner of indirectly indicating the to-be-indicated information by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated in an arrangement sequence of a plurality of pieces of information that is pre-agreed on (for example, specified in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by sending configuration information to a receive end device by a transmit end device.

It may be understood that "sending" and "receiving" in this application indicate a signal transmission direction. For example, "sending information to XX" may be understood as that a destination end of the information is XX, and may include direct sending through an air interface, or may include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may also be understood as "output" of a chip interface, and "receiving" may also be understood as "input" of the chip interface.

In other words, sending and receiving may be performed between devices, for example, between a network device and a terminal device, or may be performed inside a device, for example, sending or receiving is performed between parts, modules, chips, software modules, or hardware modules inside the device through a bus, a cable, or an interface.

It may be understood that necessary processing, such as coding and modulation, may be performed on the information between a source end and a destination end between which information is sent. However, the destination end may understand valid information from the source end. Similar descriptions in this application may be understood similarly, and details are not described again.

The technical solutions of this application may be applied to a cellular communication system related to the 3rd generation partnership project (3rd generation partnership project, 3GPP), for example, a 4th generation (4th generation, 4G) communication system, a 5th generation (5th generation, 5G) communication system, or a communication system after the 5th generation communication system, and for example, a sixth generation communication system. For example, the fourth generation communication system may include a long term evolution (long term evolution, LTE) communication system. The fifth generation communication system may include a new radio (new radio, NR) communication system. The technical solutions of this application may also be applied to a wireless fidelity (wireless fidelity, Wi-Fi) system, a communication system that supports convergence of a plurality of wireless technologies, a device-to-device (device-to-device, D2D) system, a vehicle-to-everything (vehicle to everything, V2X) communication system, a satellite communication system, and the like. The wireless communication system in this application further includes but is not limited to a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, or a time division-synchronization code division multiple access (time division-synchronization code division multiple access, TD-SCDMA) system.

The communication system to which the technical solutions of this application are applicable includes a first apparatus and a second apparatus. Optionally, the communication system further includes more apparatuses, and the second apparatus and the more apparatuses may perform technical solutions similar to those in this application.

Optionally, the first apparatus is a network device or a terminal device; or the first apparatus is a chip, a chip system, or a processor in a network device or a terminal device; or the first apparatus is a logic module, software, or the like that implements some or all of functions of a network device; or the first apparatus is a logic module, software, or the like that implements some or all of functions of a terminal device.

Optionally, the second apparatus is a network device or a terminal device; or the first apparatus is a chip, a chip system, or a processor in a network device or a terminal device; or the first apparatus is a logic module, software, or the like that implements some or all of functions of a network device; or the second apparatus is a logic module, software, or the like that implements some or all of functions of a terminal device.

For example, the first apparatus is a terminal device, and the second apparatus is a network device; or the first apparatus is a network device, and the second apparatus is a terminal device; or the first apparatus is a first terminal device, and the second apparatus is a second terminal device. Optionally, the network device is an access network device or a core network device. The following mainly describes the technical solutions of this application by using an example in which the network device is an access network device.

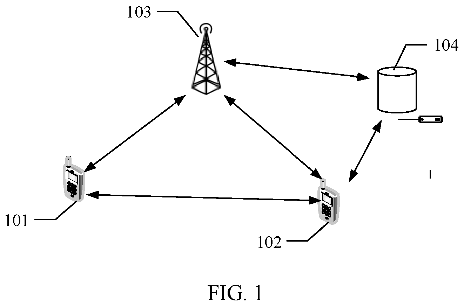

FIG. 1 is a diagram of a communication system according to an embodiment of this application. As shown in FIG. 1, the first apparatus is a terminal device 101, and the second apparatus is a base station 103. Alternatively, the first apparatus is a base station 103, and the second apparatus is a terminal device 101. The technical solutions of this application may be performed between the terminal device 101 and the base station 103. Alternatively, the first apparatus is a terminal device 101, and the second apparatus is a terminal device 102. The technical solutions of this application may be performed between the terminal device 101 and the terminal device 102. As shown in FIG. 1, the communication system includes an independent AI network element 104, or AI modules may be disposed in the base station and the terminal device respectively, to provide an AI service.

The following describes a terminal device and a network device in this application.

The terminal device is also referred to as user equipment (user equipment, UE), a mobile station (mobile station, MS), a mobile terminal (mobile terminal, MT), customer premise equipment (customer premise equipment, CPE), or the like. The terminal device is a device that includes a wireless communication function (providing voice/data connectivity for a user), for example, a handheld device having a wireless connection function, an in-vehicle device, or a machine type communication (machine type communication, MTC) terminal. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. For example, the wireless terminal in self driving may be an uncrewed aerial vehicle, a helicopter, or an airplane. For example, a wireless terminal in vehicle-to-everything may be an in-vehicle device, vehicle equipment, an in-vehicle module, a vehicle, or a ship. The wireless terminal in industrial control may be a camera, a robot, a robotic arm, or the like. The wireless terminal in the smart home may be a television, an air conditioner, a sweeper, a speaker, a set-top box, or the like.

It should be noted that the terminal device may be a device or an apparatus with a chip, a device or an apparatus integrated with a circuit, or a chip, a module, or a control unit in the device or the apparatus shown above. This is not specifically limited in this application.

The network device is a device that is deployed in a radio access network and that provides a wireless communication function for the terminal device. The network device may also be referred to as an access network (radio access network, RAN) entity, an access node, a network node, a communication apparatus, or the like.

Specifically, the network device may be an access network device in a cellular system related to the 3rd generation partnership project (3rd generation partnership project, 3GPP), for example, a 4th generation (fourth-generation, 4G) mobile communication system or a 5G mobile communication system. Alternatively, the network device may be an access network device in an open radio access network (open RAN, O-RAN, or ORAN) or a cloud radio access network (cloud radio access network, CRAN). Alternatively, the network device may be an access network device in a communication system obtained by converging two or more of the foregoing communication systems.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a wireless controller in a CRAN scenario, a wireless backhaul node, a transmission point (transmission point, TP), or a transmission and receiving point (transmission and receiving point, TRP). The network device may alternatively be an access network device in a 5G mobile communication system, for example, a next generation NodeB (next generation NodeB, gNB), a TRP, or a TP in a new radio (new radio, NR) system, or one antenna panel or a group of antenna panels (including a plurality of antenna panels) of a base station in a 5G mobile communication system. Alternatively, the network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, in a remote radio unit (remote radio unit, RRU), an active antenna unit (active antenna unit, AAU), or a remote radio head (remote radio head, RRH). Alternatively, the network device may be a server, a wearable device, a vehicle, an in-vehicle device, or the like. For example, the network device may be a road side unit (road side unit, RSU) in a V2X technology.

It should be noted that in different systems, the CU (or the CU-CP and the CU-UP), the DU, or the RU may have different names, but a person skilled in the art may understand meanings of the names. For example, in an ORAN system, the CU may also be referred to as an open central unit (open central unit, O-CU) or an open CU, the DU may also be referred to as an open distributed unit (open distributed unit, O-DU), the central unit-control plane (central unit-control plane, CU-CP) may also be referred to as an open central unit-control plane (open central unit-control plane, O-CU-CP) or an open CU-CP, the central unit-user plane (central unit-user plane, CU-UP) may also be referred to as an open central unit-user plane (open central unit-user plane, O-CU-UP) or an open CU-UP, and the RU may also be referred to as an open radio unit (open radio unit, O-RU). This is not specifically limited in this application. Any unit in the CU, the CU-CP, the CU-UP, the DU, and the RU in this application may be implemented by a software module, a hardware module, or a combination of the software module and the hardware module.

Optionally, for network elements in the ORAN system, each network element may implement a protocol layer function shown in Table 1.

Table 1

| ORAN network element | Protocol layer function |
| --- | --- |
| O-CU-CP | RRC and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), media access control (media access control, MAC), and physical higher layer (PHY-high) |
| O-RU | Physical lower layer (PHY-low) |

It should be noted that the network device may be one or more network elements shown in Table 1. This is not specifically limited in this application.

It should be noted that Table 1 is merely an example. During actual application, a protocol layer function supported by each network element is not limited. For example, each network element may support more protocol layer functions, or the protocol layer function supported by each network element is specifically configured based on an actual situation. This is not specifically limited in this application.

Architectures of the CU and the DU of the access network device are described below. The access network device includes at least one CU and at least one DU. Optionally, the access network device further includes at least one RU.

Descriptions are provided below by using an example in which the access network device includes one CU and one DU. The CU has some functions of a core network, and the CU may include a CU-CP and a CU-UP. The CU and the DU may be configured based on protocol layer functions of a wireless network that are implemented by the CU and the DU. For example, the CU is configured to implement functions of a packet data convergence protocol (packet data convergence protocol, PDCP) layer and a protocol layer above the PDCP layer (for example, an RRC layer and/or an SDAP layer). The DU is configured to implement a function of a protocol layer below the PDCP layer (for example, an RLC layer, a MAC layer, and/or a physical (physical, PHY) layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

When the CU includes the CU-CP and a CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element configured to implement a control plane function in the core network. The network element configured to implement the control plane function in the core network may be an access and mobility function network element, for example, an access and mobility management function (access and mobility management function, AMF) in the 5G mobile communication system. The access and mobility function network element is configured to be responsible for mobility management in a mobile network, for example, position update of a terminal device, network registration of the terminal device, and handover of the terminal device. The CU-UP may interact with a network element configured to implement a user plane function in the core network. The network element configured to implement the user plane function in the core network, for example, a user function (user plane function, UPF) in the 5G mobile communication system, is configured to be responsible for forwarding and receiving data in the terminal device.

The foregoing configuration of the CU and the DU is merely an example. Alternatively, functions of the CU and the DU may be configured as required. For example, the CU or the DU may be configured to have functions of more protocol layers, or the CU or the DU may be configured to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, functions of the CU or the DU may alternatively be obtained through division based on a service type or another system requirement. For example, division is performed based on a latency, a function whose processing time needs to satisfy a small latency requirement is set on the DU, and a function whose processing time does not need to satisfy the latency requirement is set on the CU.

The DU and the RU may operate together to implement a function of the PHY layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement higher-layer functions of the PHY layer, and the RU is configured to implement lower-layer functions of the PHY layer or implement the lower-layer functions and a radio frequency function. The higher-layer functions of the physical layer may include a part of functions of the physical layer, and the part of functions are closer to the MAC layer. The lower-layer functions of the physical layer may include another part of functions of the physical layer, and the part of functions are closer to an intermediate radio frequency side.

Optionally, the network device may alternatively be a core network device. The core network device is responsible for access control, registration management, service management, mobility management, and the like for the terminal device to access a network. For example, the core network device is the AMF.

It should be noted that the network device may be the device or the apparatus shown above, or may be a component (for example, a chip), a module, or a unit in the device or the apparatus shown above. This is not specifically limited in this application.

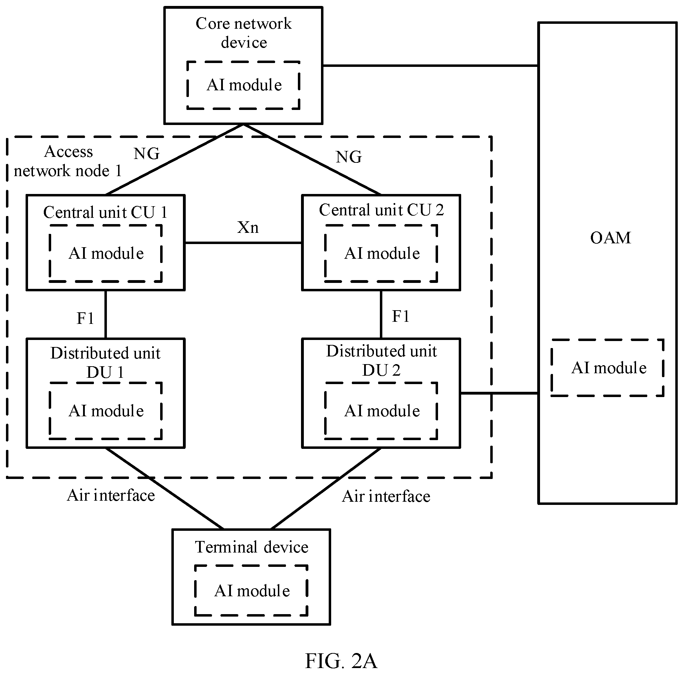

In the communication system provided in this application, an AI network element may be introduced to implement a part or all of AI-related operations. The AI network element may also be referred to as an AI node, an AI device, an AI entity, an AI module, an AI model, an AI unit, or the like. The AI network element may be built in a network element in a communication system. For example, the AI network element may be an AI module built in an access network device, a core network device, a cloud server, or operation, administration, and maintenance (operation, administration and maintenance, OAM), to implement an AI-related function. The OAM may be used as operation, administration, and maintenance of the core network device and/or operation, administration, and maintenance of the access network device. Alternatively, the AI network element may be an independently disposed network element in the communication system. Optionally, the terminal device or a chip built in the terminal device may alternatively include an AI entity, configured to implement an AI-related function. With reference to FIG. 2A, the following describes another communication system provided in an embodiment of this application.

FIG. 2A is another diagram of a communication system according to an embodiment of this application. As shown in FIG. 2A, network elements in the communication system are connected to each other through an interface (for example, an NG interface or an Xn interface) or an air interface. One or more AI modules (for clarity, FIG. 2A shows only one AI module) are disposed in these network element nodes (for example, one or more devices in a core network device, an access network node (a RAN node), a terminal, or an OAM). The access network node may be used as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed in different nodes or devices, or may be deployed in a same node or device.

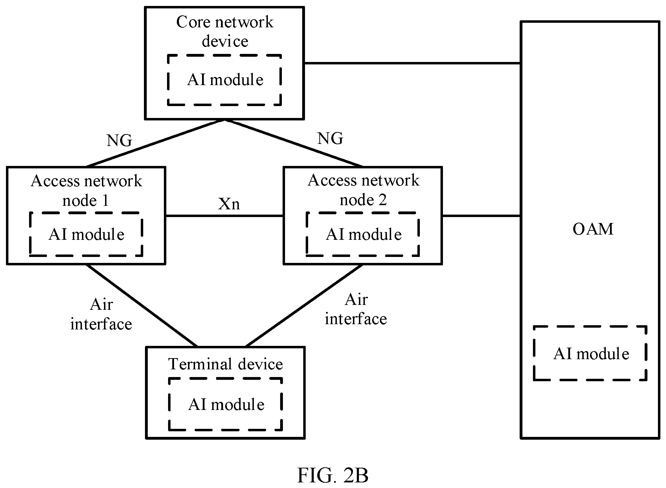

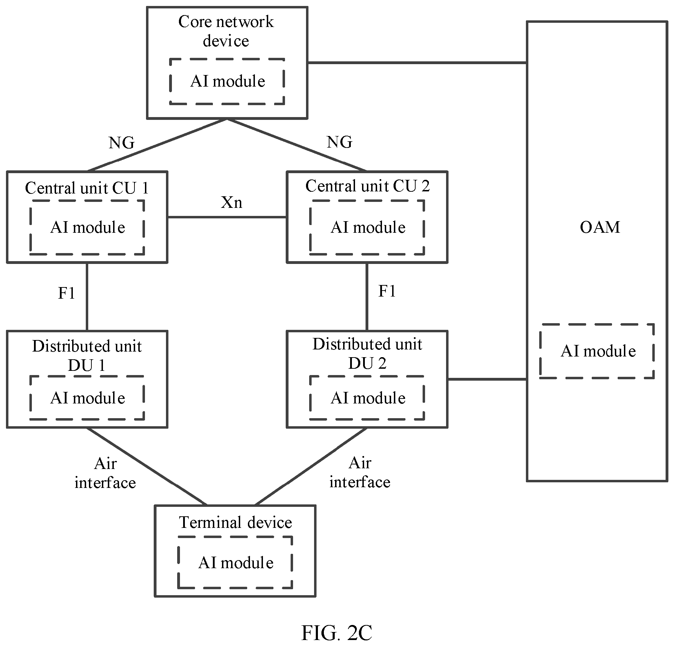

It should be noted that the access network node shown in FIG. 2A above may be used as a whole, or the access network node shown in FIG. 2A above uses an architecture in which the CU and the DU are separated. FIG. 2B is a diagram of a communication system in which an access network node is used as a whole and the access network node is connected to a terminal device. FIG. 2C is a diagram of a communication system in which an access network node uses an architecture in which a CU and a DU are separated.

Currently, in wireless communication, a neural network is proposed to optimize a channel coding module, a modulation module, a waveform processing module, and other modules at a physical layer. This may change components of existing processing modules at the physical layer, for example, a joint channel coding and modulation module and a predistortion processing module; and may also change an existing signal processing mode, for example, pilot-free modulation. Therefore, a conventional air interface protocol and an air interface protocol implemented based on AI may coexist in a future network. Therefore, how to select an appropriate air interface protocol for the terminal device is a problem worth considering.

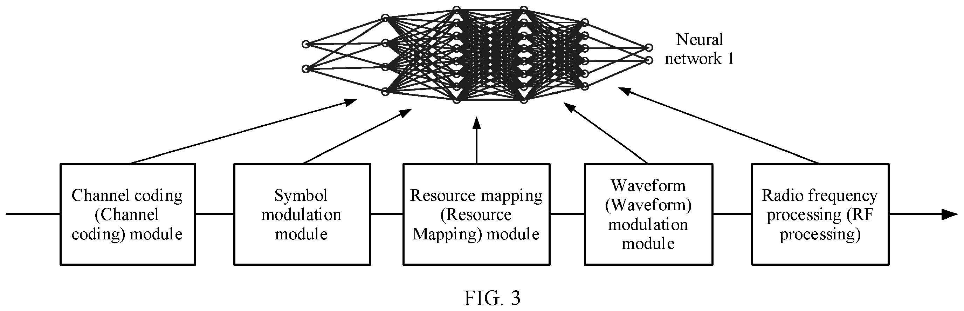

A signal is transmitted between a network device and the terminal device through an air interface. For a transmit end device, as shown in FIG. 3, at a physical layer, air interface processing may include at least one of the following: channel coding (channel coding), symbol modulation, resource mapping (resource mapping), waveform (waveform) modulation, and radio frequency processing (RF processing). Specifically, the transmit end device may perform channel coding via a channel coding module, perform QAM modulation via a symbol modulation module, perform resource mapping via a resource mapping module, perform waveform processing via a waveform modulation module, and transmit a signal via a radio frequency processing module.

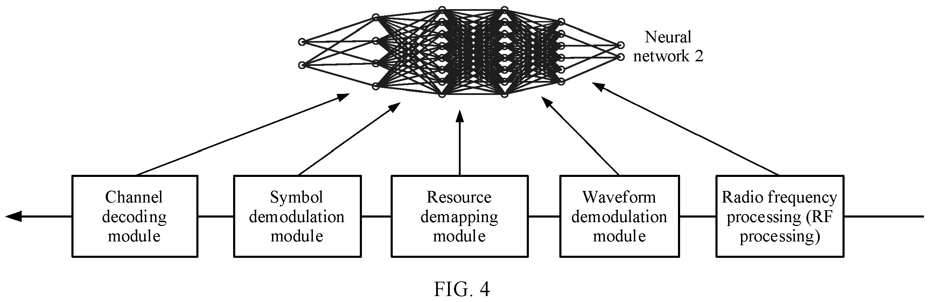

For a receive end device, as shown in FIG. 4, at a physical layer, air interface processing may include at least one of the following: channel decoding, symbol demodulation, resource demapping, waveform demodulation, or radio frequency processing. Specifically, the receive end device may receive a signal via a radio frequency processing module, perform waveform demodulation via a waveform demodulation module, perform resource demapping via a resource demapping module, perform symbol demodulation via a symbol demodulation module, and perform channel decoding via a channel decoding module.

Certainly, the foregoing describes only an air interface processing process at the physical layer. Actually, air interface processing may further include some processing at a MAC layer and/or some processing at a PDCP layer, for example, scheduler configuration at the MAC layer and encryption/decryption configuration at the PDCP layer.

FIG. 3 and FIG. 4 describe only air interface processing processes from the physical layer. Actually, the air interface processing process at the physical layer may alternatively be another implementation process. FIG. 3 and FIG. 4 do not limit this application. For example, in the example shown in FIG. 3, some functional modules may be combined, or some functional modules may further subdivide functions. This is not specifically limited in this application.

In this application, a first-type air interface is configured to generate an air interface signal based on AI and/or parse the air interface signal based on AI. Optionally, the first-type air interface includes one or more functional modules, and at least one functional module in the one or more functional modules is implemented based on AI. Optionally, the first-type air interface may also be referred to as an intelligent air interface, an AI air interface, or a first air interface. This is not specifically limited in this application.

A second-type air interface is configured to generate an air interface signal based on non-AI and/or parse the air interface signal based on non-AI. Optionally, the second-type air interface includes one or more functional modules, and each functional module in the one or more functional modules is implemented based on non-AI. Optionally, the second-type air interface may also be referred to as a non-intelligent air interface, a non-AI air interface, or a second air interface.

This is not specifically limited in this application.

Optionally, the one or more functional modules include at least one of the following: a channel coding module, a symbol modulation module, a resource mapping module, a waveform modulation module, a radio frequency process module, a channel decoding module, a symbol demodulation module, a resource demapping module, a waveform demodulation module, a radio frequency processing module, a scheduler module, or an encryption/decryption module.

For example, for the first-type air interface, at least one of the channel coding module, the symbol modulation module, the resource mapping module, the waveform modulation module, the radio frequency process module, the scheduler module, and the encryption/decryption module is implemented based on AI. The channel coding module, the symbol modulation module, the resource mapping module, the waveform modulation module, the radio frequency process module, the scheduler module, and the encryption/decryption module may be jointly configured to generate an air interface signal. For another example, at least one of the channel decoding module, the symbol demodulation module, the resource demapping module, the waveform demodulation module, the radio frequency processing module, the scheduler module, and the encryption/decryption module is implemented based on AI. The channel decoding module, the symbol demodulation module, the resource demapping module, the waveform demodulation module, the radio frequency processing module, the scheduler module, and the encryption/decryption module may be jointly configured to parse an air interface signal.

Optionally, for the first-type air interface, each functional module in the one or more functional modules may be implemented via one model, or a plurality of functional modules in the one or more functions may be implemented via one model. Optionally, the model may be a neural network or another model. This is not specifically limited in this application. For example, as shown in FIG. 3, the channel coding module, the symbol modulation module, the resource mapping module, the waveform modulation module, and the radio frequency process module are jointly implemented via a neural network 1. As shown in FIG. 4, the channel decoding module, the symbol demodulation module, the resource demapping module, the waveform demodulation module, and the radio frequency processing module are jointly implemented via a neural network 2.

The following describes the technical solutions of this application with reference to specific embodiments.

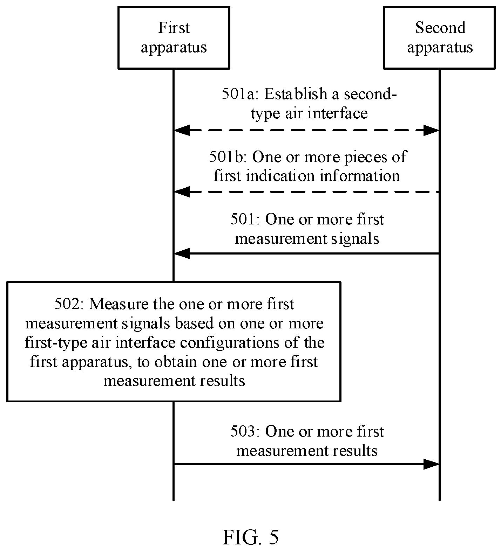

FIG. 5 is a diagram of an embodiment of a measurement method according to an embodiment of this application. Refer to FIG. 5. The method includes the following steps.

501: A second apparatus sends one or more first measurement signals to a first apparatus. Correspondingly, the first apparatus receives the one or more first measurement signals from the second apparatus.

Specifically, the second apparatus generates the one or more first measurement signals based on one or more second air interface configurations. The one or more first measurement signals correspond to the one or more second air interface configurations. For example, one first measurement signal corresponds to one second air interface configuration, and different first measurement signals correspond to different second air interface configurations. Each first measurement signal is generated by the second apparatus based on a second air interface configuration corresponding to the first measurement signal. In other words, each first measurement signal is sent by the second apparatus via a first-type air interface configured based on the second air interface configuration corresponding to the first measurement signal. The one or more first measurement signals may be understood as one or more air interface signals. For example, as shown in Table 2, the one or more second air interface configurations include four second air interface configurations: a second air interface configuration 1 to a second air interface configuration 4. The one or more first measurement signals include four first measurement signals: a first measurement signal 1 to a first measurement signal 4. The first measurement signal 1 is generated by the second apparatus based on the second air interface configuration 1. The first measurement signal 2 is generated by the second apparatus based on the second air interface configuration 2. The first measurement signal 3 is generated by the second apparatus based on the second air interface configuration 3. The first measurement signal 4 is generated by the second apparatus based on the second air interface configuration 3. For the second air interface configuration, refer to the following descriptions.

It should be noted that the one or more first measurement signals may carry same information or data, or the one or more first measurement signals may carry different information or data. This is not specifically limited in this application.

Table 2

| Second air interface configuration | First measurement signal |
| --- | --- |
| Second air interface configuration 1 | First measurement signal 1 |
| Second air interface configuration 2 | First measurement signal 2 |
| Second air interface configuration 3 | First measurement signal 3 |
| Second air interface configuration 4 | First measurement signal 4 |

The one or more second air interface configurations are used to configure one or more first-type air interfaces. For example, one second air interface configuration is used to configure one first-type air interface, and different second air interface configurations are used to configure different first-type air interfaces. The second apparatus serves as a transmit end device. Optionally, each first-type air interface configured based on the one or more second air interface configurations includes one or more functional modules, and at least one functional module in the one or more functional modules is implemented based on AI. Optionally, the one or more functional modules in each first-type air interface configured based on the one or more second air interface configurations include at least one of the following: a channel coding module, a symbol modulation module, a resource mapping module, a waveform modulation module, a radio frequency process module, a scheduler module, or an encryption/decryption module. For example, the first measurement signal 1 is obtained by the second apparatus by processing to-be-sent data or to-be-sent information via one or more functional modules included in the second air interface configuration 1.

Optionally, the one or more second air interface configurations are preconfigured in the second apparatus.

In a possible implementation, the first apparatus is a terminal device, and the second apparatus is a network device. In this implementation, the one or more first measurement signals are downlink signals.

In another possible implementation, the first apparatus is a network device, and the second apparatus is a terminal device. In this implementation, the one or more first measurement signals are uplink signals.

In still another possible implementation, the first apparatus is a first terminal device, and the second apparatus is a second terminal device. The one or more first measurement signals are signals on a sidelink.

Optionally, the embodiment shown in FIG. 5 further includes step 501a. Step 501a may be performed before step 501.

501a: Establish a second-type air interface between the first apparatus and the second apparatus.

In a possible implementation, the first apparatus is a terminal device, and the second apparatus is a network device; or the first apparatus is a network device, and the second apparatus is a terminal device. The terminal device and the network device establish the second-type air interface through a random access process.

In another possible implementation, the first apparatus is a first terminal device, and the second apparatus is a second terminal device. The first terminal device and the second terminal device establish the second-type air interface through a sidelink discovery procedure. Alternatively, the first terminal device and the second terminal device establish the second-type air interface based on scheduling of a network device.

In this implementation, parameter configuration, signaling transmission, and the like can be completed between the first apparatus and the second apparatus through the second-type air interface. Then, the first apparatus and the second apparatus perform step 501.

502: The first apparatus measures the one or more first measurement signals based on one or more first air interface configurations, to obtain one or more first measurement results.

The one or more first measurement results represent performance of a first-type air interface configured based on the one or more first air interface configurations.

The one or more first air interface configurations are used to configure one or more first-type air interfaces. Optionally, one first air interface configuration is used to configure one first-type air interface, and different first air interface configurations are used to configure different first-type air interfaces.

Each first-type air interface configured based on the one or more first air interface configurations includes one or more functional modules, and at least one functional module in the one or more functional modules is implemented based on AI. The first apparatus serves as a receive end device. Optionally, the one or more functional modules in each first-type air interface configured based on the one or more first air interface configurations include at least one of the following: a channel decoding module, a symbol demodulation module, a resource demapping module, a waveform demodulation module, a radio frequency processing module, a scheduler module, or an encryption/decryption module.

Optionally, the one or more first air interface configurations one-to-one correspond to the one or more first measurement results. For example, one first air interface configuration corresponds to one first measurement result, and different first air interface configurations correspond to different first measurement results.

Optionally, the one or more first measurement signals correspond to the one or more first air interface configurations, and a first measurement result corresponding to each first measurement signal is obtained through measurement based on a first air interface configuration corresponding to the first measurement signal.

In a possible implementation, each first measurement signal in the one or more first measurement signals corresponds to a plurality of first air interface configurations.

In this implementation, different first measurement signals may correspond to different first air interface configurations, or different first measurement signals may correspond to a same first air interface configuration. For example, as shown in Table 3, the one or more first air interface configurations include four first air interface configurations, and the one or more first measurement signals include four first measurement signals: a first measurement signal 1 to a first measurement signal 4. Each first measurement signal corresponds to the four first air interface configurations. The second apparatus measures each first measurement signal based on the four first air interface configurations, to obtain first measurement results shown in Table 3.

Table 3

| First measurement signal | First air interface configuration | First measurement result |
|---|---|---|
| First measurement signal 1 | First air interface configuration 1 | First measurement result 1 |
| | First air interface configuration 2 | First measurement result 2 |
| | First air interface configuration 3 | First measurement result 3 |
| | First air interface configuration 4 | First measurement result 4 |
| First measurement signal 2 | First air interface configuration 1 | First measurement result 5 |
| | First air interface configuration 2 | First measurement result 6 |
| | First air interface configuration 3 | First measurement result 7 |
| | First air interface configuration 4 | First measurement result 8 |
| First measurement signal 3 | First air interface configuration 1 | First measurement result 9 |
| | First air interface configuration 2 | First measurement result 10 |
| | First air interface configuration 3 | First measurement result 11 |
| | First air interface configuration 4 | First measurement result 12 |
| First measurement signal 4 | First air interface configuration 1 | First measurement result 13 |
| | First air interface configuration 2 | First measurement result 14 |
| | First air interface configuration 3 | First measurement result 15 |
| | First air interface configuration 4 | First measurement result 16 |

In another possible implementation, the one or more first measurement signals one-to-one correspond to the one or more first air interface configurations. In this implementation, optionally, one first measurement signal corresponds to one first air interface configuration, and different first measurement signals correspond to different first air interface configurations. For another example, as shown in Table 4, the one or more first air interface configurations include four first air interface configurations, and the one or more first measurement signals include four first measurement signals: a first measurement signal 1 to a first measurement signal 4. The first measurement signal 1 corresponds to the first air interface configuration 1, the first measurement signal 2 corresponds to the first air interface configuration 2, the first measurement signal 3 corresponds to the first air interface configuration 3, and the first measurement signal 4 corresponds to the first air interface configuration 4. The first measurement result 1 is obtained by the second apparatus by measuring the first measurement signal 1 based on the first air interface configuration 1. The first measurement result 2 is obtained by the second apparatus by measuring the first measurement signal 2 based on the first air interface configuration 2. The first measurement result 3 is obtained by the second apparatus by measuring the first measurement signal 3 based on the first air interface configuration 3. The first measurement result 4 is obtained by the second apparatus by measuring the first measurement signal 4 based on the first air interface configuration 4.

Table 4

| First measurement signal | First air interface configuration | First measurement result |
|---|---|---|
| First measurement signal 1 | First air interface configuration 1 | First measurement result 1 |
| First measurement signal 2 | First air interface configuration 2 | First measurement result 2 |
| First measurement signal 3 | First air interface configuration 3 | First measurement result 3 |
| First measurement signal 4 | First air interface configuration 4 | First measurement result 4 |

Optionally, the one or more first air interface configurations are preconfigured in the first apparatus.
Optionally, the one or more first measurement signals include a first target measurement signal. Step 502 above specifically includes step 502a and step 502b.
502a: The first apparatus receives the first target measurement signal through a first-type air interface configured based on a first air interface configuration corresponding to the first target measurement signal.

For example, the following describes, with reference to FIG. 4, a possible implementation in which the first apparatus receives the first target measurement signal through the first-type air interface configured based on the first air interface configuration corresponding to the first target measurement signal. As shown in FIG. 4, the first-type air interface configured based on the first air interface configuration corresponding to the first target measurement signal includes a channel decoding module, a symbol demodulation module, a resource demapping module, a waveform demodulation module, and a radio frequency processing module. The channel decoding module, the symbol demodulation module, the resource demapping module, the waveform demodulation module, and the radio frequency processing module are implemented via a neural network 2. The first apparatus performs radio frequency processing, waveform demodulation, resource demapping, symbol demodulation, and channel decoding on the first target measurement signal from the second apparatus via the neural network 2, so that the first apparatus receives the first target measurement signal.

502b: The first apparatus determines, based on the first target measurement signal received by the first apparatus, a first measurement result corresponding to the first target measurement signal.

In a possible implementation, the first apparatus determines a similarity between the first target measurement signal received by the first apparatus and a first target measurement signal pre-agreed on between the first apparatus and the second apparatus. In other words, a first measurement signal corresponding to the first target measurement signal includes the similarity between the first target measurement signal received by the first apparatus and the first target measurement signal pre-agreed on between the first apparatus and the second apparatus. For example, the first apparatus calculates a correlation coefficient between the first target measurement signal received by the first apparatus and the first target measurement signal pre-agreed on between the first apparatus and the second apparatus. The correlation coefficient represents the similarity between the first target measurement signal received by the first apparatus and the first target measurement signal pre-agreed on between the first apparatus and the second apparatus. For example, data carried in the first target measurement signal received by the first apparatus is alphb, and data carried in the first target measurement signal pre-agreed on between the first apparatus and the second apparatus is alpha. Therefore, it can be learned that the similarity between the first target measurement signal received by the first apparatus and the first target measurement signal pre-agreed on between the first apparatus and the second apparatus is 80%.

In another possible implementation, the first apparatus determines a bit error rate of a data packet carried in the first target measurement signal received by the first apparatus. In other words, the first measurement result corresponding to the first target measurement signal includes the bit error rate of the data packet carried in the first target measurement signal received by the first apparatus.

Optionally, the embodiment shown in FIG. 5 further includes step 501b.

501b: The second apparatus sends one or more pieces of first indication information to the first apparatus. Correspondingly, the first apparatus receives the one or more pieces of first indication information from the second apparatus.

The one or more pieces of first indication information correspond to the one or more first measurement signals. Each piece of first indication information indicates a first air interface configuration corresponding to a first measurement signal corresponding to the first indication information. The first air interface configuration corresponding to the first measurement signal is used to measure the first measurement signal. For example, as shown in Table 4, the one or more pieces of first indication information may include four pieces of first indication information: first indication information 1 to first indication information 4. The first indication information 1 indicates that the first measurement signal 1 corresponds to the first air interface configuration 1. The first indication information 2 indicates that the first measurement signal 2 corresponds to the first air interface configuration 2. The first indication information 2 indicates that the first measurement signal 3 corresponds to the first air interface configuration 3. The first indication information 4 indicates that the first measurement signal 4 corresponds to the first air interface configuration 4. In this way, the first apparatus measures the corresponding first measurement signal based on the corresponding first air interface configuration.

Optionally, there is no fixed execution sequence between step 501b and step 501. Step 501 may be performed before step 501b; or step 501b may be performed before step 501; or step 501 and step 501b may be simultaneously performed based on a situation. This is not specifically limited in this application. If the embodiment shown in FIG. 5 further includes step 501a, step 501b may be performed before step 501a.

Optionally, the one or more pieces of first indication information are carried in measurement control information.

Optionally, the measurement control information is carried in an RRC message. For example, the measurement control information is carried in an RRC reconfiguration (RRC reconfiguration) message. In this implementation, optionally, the second apparatus sends an RRC reconfiguration complete (RRC reconfiguration complete) message to the first apparatus.

Optionally, the second apparatus may send the one or more pieces of first indication information to the first apparatus through a first-type air interface or a second-type air interface currently used by the second apparatus. Correspondingly, the first apparatus may receive the one or more pieces of first indication information from the second apparatus through a first-type air interface or a second-type air interface currently used by the first apparatus.

503: The first apparatus sends the one or more first measurement results to the second apparatus. Correspondingly, the second apparatus receives the one or more first measurement results from the first apparatus.

Specifically, after the second apparatus receives the one or more first measurement results, the second apparatus may determine, based on the one or more second measurement results, performance of each first-type air interface configured based on the one or more first air interface configurations, to help the second apparatus indicate a corresponding first air interface configuration to the first apparatus, so as to establish, between the first apparatus and the second apparatus, the first-type air interface configured based on the first air interface configuration. The first apparatus may receive, through the first-type air interface configured based on the first air interface configuration, data and/or a signal that are/is sent by the second apparatus.

Optionally, the second apparatus may determine, based on the one or more first measurement results, performance of each first-type air interface configured based on the one or more second air interface configurations. The second apparatus may select a corresponding second air interface configuration for the second apparatus, and the second apparatus establishes a first-type air interface with the first apparatus based on the second air interface configuration. The second apparatus may send the data and/or the signal to the first apparatus through the first-type air interface configured based on the second air interface configuration.

In a possible implementation, the second apparatus may indicate, to the first apparatus, a second air interface configuration selected by the second apparatus. The first apparatus may further send data and/or a signal to the second apparatus through a first-type air interface configured based on the second air interface configuration. The second apparatus may further receive, through the first-type air interface configured based on the first air interface configuration selected for the first apparatus, the data and/or the signal that are/is sent by the first apparatus.

Optionally, the first apparatus may send the one or more first measurement results to the second apparatus through the first-type air interface or the second-type air interface currently used by the second apparatus. Correspondingly, the second apparatus may receive the one or more first measurement results from the first apparatus through the first-type air interface or the second-type air interface currently used by the second apparatus.

In this embodiment of this application, the first apparatus receives the one or more first measurement signals from the second apparatus. Then, the first apparatus measures the one or more first measurement signals based on the one or more first air interface configurations, to obtain the one or more first measurement results. The one or more first measurement results represent the performance of the first-type air interface configured based on the one or more first air interface configurations. The first apparatus sends the one or more first measurement results to the second apparatus. It can be learned that the first apparatus can measure the one or more first measurement signals based on the one or more first air interface configurations, to obtain the one or more first measurement results. The first apparatus sends the one or more first measurement results to the second apparatus. In this way, the one or more first measurement results represent the performance of the first-type air interface configured based on the one or more first air interface configurations, to help the second apparatus indicate a corresponding first air interface configuration to the first apparatus, so as to establish, between the first apparatus and the second apparatus, the first-type air interface configured based on the first air interface configuration.

It should be noted that the foregoing describes the technical solutions of this application by using the example in which the first apparatus serves as the receive end device of the measurement signal and the second apparatus serves as the transmit end device of the measurement signal. In actual application, when the first apparatus serves a transmit end device of a measurement signal, and the second apparatus serves as a receive end device of a measurement signal, in the embodiment shown in FIG. 5, the first apparatus may be replaced with the second apparatus, and the second apparatus may be replaced with the first apparatus. In this way, an appropriate first-type air interface used by the first apparatus to send data and/or a signal to the second apparatus can be selected for the first apparatus. Optionally, an appropriate first-type air interface used by the second apparatus to receive the data and/or the signal from the first apparatus can further be selected for the second apparatus.

In this application, optionally, each first air interface configuration in the one or more first air interface configurations includes a set of parameters corresponding to each functional module in the one or more functional modules. If the functional module is implemented based on AI, the functional module corresponds to a set of model parameters. For example, the functional module corresponds to a set of neural network parameters. If the functional module is implemented based on non-AI, the functional module corresponds to a set of related parameters. For example, the functional module corresponds to a set of conventional signal processing parameters. For example, the set of related parameters corresponding to the functional module includes at least one of the following: a modulation scheme, a modulation order, or a channel coding rate.

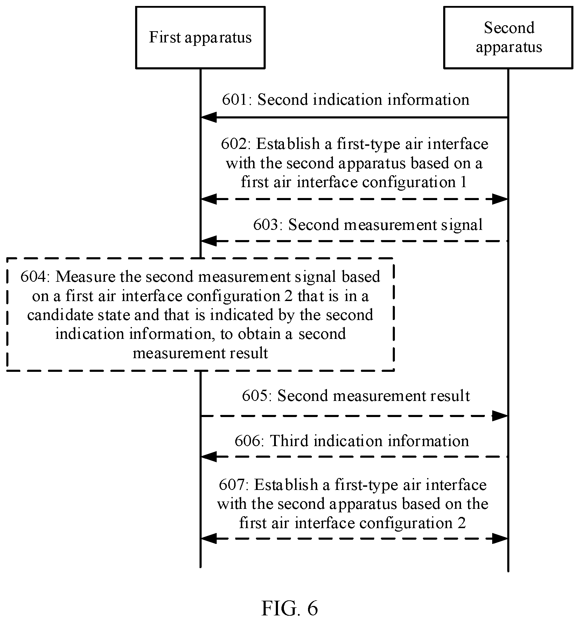

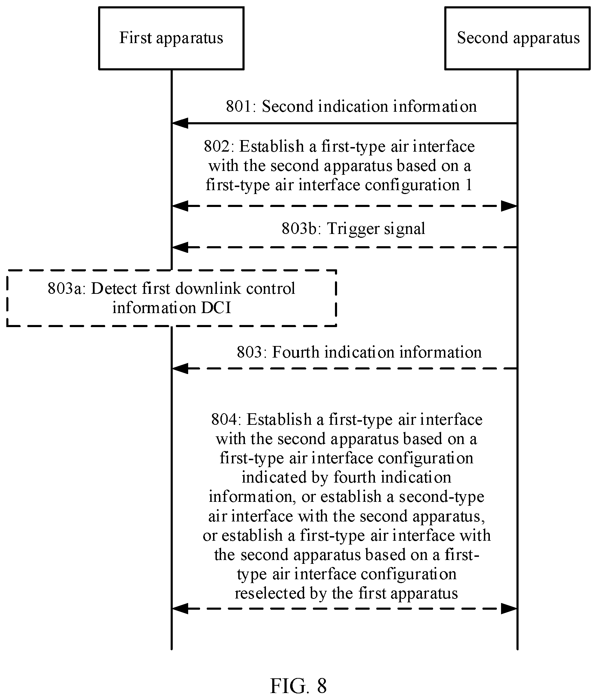

With reference to an embodiment shown in FIG. 6 or an embodiment shown in FIG. 8, the following describes a process in which a second apparatus indicates a first air interface configuration to a first apparatus, to establish a first-type air interface between the first apparatus and the second apparatus.

FIG. 6 is a diagram of another embodiment of a measurement method according to an embodiment of this application. Refer to FIG. 6. The method includes the following steps.

601: A second apparatus sends second indication information to a first apparatus. Correspondingly, the first apparatus receives the second indication information from the second apparatus.

The second indication information is used to activate at least one first air interface configuration in one or more first air interface configurations.

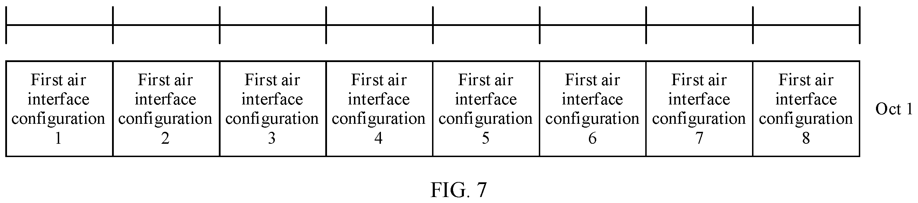

Optionally, the second indication information is carried in a MAC CE. For example, the one or more first air interface configurations include seven first air interface configurations: a first air interface configuration 1 to a first air interface configuration 8. As shown in FIG. 7, the second indication information is an octet Qct 1 in the MAC CE. In the octet, a $1^{st}$ bit corresponds to the first air interface configuration 1, a $2^{nd}$ bit corresponds to the first air interface configuration 2, a $3^{rd}$ bit corresponds to the first air interface configuration 3, a $4^{th}$ bit corresponds to the first air interface configuration 4, a $5^{th}$ bit corresponds to the first air interface configuration 5, a $6^{th}$ bit corresponds to the first air interface configuration 6, a $7^{th}$ bit corresponds to the first air interface configuration 7, and an $8^{th}$ bit corresponds to the first air interface configuration 8. The second apparatus indicates, based on a value of each bit in the octet, whether to activate the one or more first air interface configurations. For example, if a value of a bit in the octet is 1, it indicates to activate a first air interface configuration corresponding to the bit; or if a value of a bit in the octet is 0, it indicates not to activate a first air interface configuration corresponding to the bit, that is, the first air interface configuration corresponding to the bit is in a candidate state. For example, if both a value of the $1^{st}$ bit and a value of the $3^{rd}$ bit in the octet are 1, and values of other bits are all 0, it indicates to activate the first air interface configuration 1 and the first air interface configuration 3, and indicates other first air interface configurations to be in a candidate state.

Optionally, the second indication information is a bit sequence, and a bit in the bit sequence corresponds to the one or more first air interface configurations. A value of the bit in the bit sequence indicates whether to activate a first air interface configuration corresponding to the bit.

For example, one bit in the bit sequence corresponds to one first air interface configuration in the one or more first air interface configurations, and different bits in the bit sequence correspond to different first air interface configurations. For example, when a value of a bit in the bit sequence is 0, it indicates that a first air interface configuration corresponding to the bit is in a candidate state; or when a value of a bit in the bit sequence is 1, it indicates that a first air interface configuration corresponding to the bit is in an active state. Alternatively, when a value of a bit in the bit sequence is 0, it indicates that a first air interface configuration corresponding to the bit is in an active state; or when a value of a bit in the bit sequence is 1, it indicates that a first air interface configuration corresponding to the bit is in a candidate state.

Optionally, the second apparatus sends the second indication information to the first apparatus through a first-type air interface or a second-type air interface currently used by the second apparatus. Correspondingly, the first apparatus receives the second indication information from the second apparatus through a first-type air interface or a second-type air interface currently used by the first apparatus.

Optionally, the embodiment shown in FIG. 6 further includes step 602. Step 602 may be performed after step 601.

602: The first apparatus establishes a first-type air interface with the second apparatus based on the first air interface configuration 1 indicated by the second indication information.

Optionally, the at least one first air interface configuration includes the first air interface configuration 1. The first apparatus establishes the first-type air interface with the second apparatus based on the first air interface configuration 1. As shown in FIG. 4, the first air interface configuration 1 includes one or more functional modules, and each functional module is implemented based on AI. The one or more functional modules are implemented via a neural network 2. The first apparatus may process data and/or a signal from the second apparatus via the neural network 2, to restore the data and/or the signal that are/is sent by the second apparatus.

Optionally, the at least one first air interface configuration includes a plurality of first air interface configurations. The second indication information further includes priorities of the plurality of first air interface configurations. Alternatively, the second apparatus indicates priorities of the plurality of first air interface configurations to the first apparatus based on other information.

Optionally, the first apparatus may select a first air interface configuration with a highest or higher priority to establish a first-type air interface with the second apparatus. Alternatively, the first apparatus selects a first air interface configuration with better or best performance from the plurality of first air interface configurations based on one or more first measurement results, and establishes a first-type air interface with the second apparatus.

Optionally, the embodiment shown in FIG. 6 further includes step 603 to step 607. Step 603 to step 607 may be performed after step 602.

603: The second apparatus sends a second measurement signal to the first apparatus. Correspondingly, the first apparatus receives the second measurement signal from the second apparatus.

The second apparatus generates the second measurement signal based on one or more second air interface configurations, and sends the second measurement signal to the first apparatus. For example, the second measurement signal corresponds to one second air interface configuration in the one or more second air interface configurations. The second apparatus generates the second measurement signal based on the second air interface configuration. In other words, the second apparatus processes to-be-sent data or to-be-sent information based on one or more functional modules of a first-type air interface configured based on the second air interface configuration, to obtain the second measurement signal. The second measurement signal is an air interface signal.

604: The first apparatus measures the second measurement signal based on a first air interface configuration 2 that is in a candidate state and that is indicated by the second indication information, to obtain a second measurement result.

The second measurement result represents performance of a first-type air interface configured based on the first air interface configuration 2.

Step 604 is similar to the related description of step 502 in the embodiment shown in FIG. 5. Details are not described herein again.

Optionally, step 604 above specifically includes step 604a and step 604b.

604a: The first apparatus receives the second measurement signal through the first-type air interface configured based on the first air interface configuration 2.

604b: The first apparatus determines, based on the second measurement signal, the second measurement result corresponding to the second measurement signal.

Step 604a and step 604b are similar to step 502a and step 502b above. For details, refer to the related descriptions of step 502a and step 502b above.

605: The first apparatus sends the second measurement result to the second apparatus. Correspondingly, the second apparatus receives the second measurement result from the first apparatus.

Optionally, the second measurement result represents that the performance of the first-type air interface configured based on the first air interface configuration 2 is greater than or equal to a first threshold.

Specifically, if the second measurement result represents that the performance of the first-type air interface configured based on the first air interface configuration 2 is greater than or equal to the first threshold, the first apparatus may send the second measurement result to the second apparatus. It should be noted that, if the second measurement result represents that the performance of the first-type air interface configured based on the first air interface configuration 2 is less than the first threshold, the first apparatus may not send the second measurement result. The first apparatus continues to communicate with the second apparatus through the first-type air interface configured based on the first air interface configuration 1.

Optionally, the first threshold may be determined based on a channel status. For example, the second measurement result includes a similarity between the restored second measurement signal and a second measurement signal pre-agreed on between the first apparatus and the second apparatus. Alternatively, the second measurement result includes a bit error rate of a data packet carried in the restored second measurement signal. For example, the first threshold may be 80% or 90%.

Optionally, the first apparatus sends the second measurement result to the second apparatus through the first-type air interface configured based on the first air interface configuration 1. Correspondingly, the second apparatus receives the second measurement result from the first apparatus through the corresponding first-type air interface.

Optionally, the first apparatus sends the second measurement result to the second apparatus through a second-type air interface. Correspondingly, the second apparatus receives the second measurement result from the first apparatus through the second-type air interface.

606: The second apparatus sends third indication information to the first apparatus. Correspondingly, the first apparatus receives the third indication information from the second apparatus.

The third indication information is used to activate the first air interface configuration 2. In this implementation, the second apparatus may reselect a to-be-activated first air interface configuration for the first apparatus based on the third indication information, thereby updating the first air interface configuration used by the first apparatus.

Optionally, the second apparatus sends the third indication information to the first apparatus through the first-type air interface. Correspondingly, the first apparatus receives the third indication information from the second apparatus through the first-type air interface configured based on the first air interface configuration 1.

Optionally, the second apparatus sends the third indication information to the first apparatus through the second-type air interface, and the first apparatus receives the third indication information from the first apparatus through the second-type air interface.

607: The first apparatus establishes the first-type air interface with the second apparatus based on the first air interface configuration 2.

Step 607 is similar to step 602. For details, refer to the related description of step 602. Details are not described herein again.

In the embodiment shown in FIG. 6, the second apparatus sends the second indication information to the first apparatus. In this way, the second apparatus indicates the at least one first air interface configuration to the first apparatus. The first apparatus establishes the first-type air interface with the second apparatus based on the first air interface configuration 1 in the at least one first air interface configuration. Further, if the second apparatus determines, based on the second measurement result reported by the first apparatus, that the performance of the first air interface configuration 2 is better, the second apparatus may reselect a first air interface configuration for the first apparatus, thereby improving performance of transmission between the first apparatus and the second apparatus.

FIG. 8 is a diagram of still another embodiment of a measurement method according to an embodiment of this application. Refer to FIG. 8. The method includes the following steps.

801: A second apparatus sends second indication information to a first apparatus. Correspondingly, the first apparatus receives the second indication information from the second apparatus.

Step 801 is similar to step 601 in the embodiment shown in FIG. 6. For details, refer to the related description of step 601. Details are not described herein again.

Optionally, the second apparatus sends first indication information to the first apparatus through a first-type air interface or a second-type air interface currently used by the second apparatus. Correspondingly, the first apparatus receives the first indication information from the second apparatus through a first-type air interface or a second-type air interface currently used by the first apparatus.

Optionally, the embodiment shown in FIG. 8 further includes step 802. Step 802 may be performed after step 801.

802: The first apparatus establishes a first-type air interface with the second apparatus based on a first air interface configuration 1.

Step 802 is similar to step 602 in the embodiment shown in FIG. 6. For details, refer to the related description of step 602. Details are not described herein again.

Optionally, the embodiment shown in FIG. 8 further includes steps 803 and 804. Step 803 and step 804 may be performed after step 802.

803: The second apparatus sends fourth indication information to the first apparatus. Correspondingly, the first apparatus receives the fourth indication information from the second apparatus.

The fourth indication information indicates one first air interface configuration in a first air interface configuration activated via the second indication information, or the fourth indication information indicates the first apparatus to establish a connection to the second apparatus through a second-type air interface, or the fourth indication information indicates the first apparatus to reselect a first air interface configuration from a first air interface configuration activated via the second indication information.

Optionally, the second apparatus sends the fourth indication information to the first apparatus through a first-type air interface. Correspondingly, the first apparatus receives the fourth indication information from the second apparatus through the first-type air interface configured based on the first air interface configuration 1.

Optionally, the second apparatus sends the fourth indication information to the first apparatus through a second-type air interface. Correspondingly, the first apparatus receives the fourth indication information from the second apparatus through the second-type air interface.

Optionally, when performance of the first-type air interface configured based on the first air interface configuration 1 is less than a first threshold, the second apparatus sends the fourth indication information to the first apparatus.

Optionally, the fourth indication information is carried in first DCI.

Optionally, the fourth indication information is a first field in the first DCI. A value of the first field indicates a corresponding first air interface configuration, or indicates the first apparatus to fall back to establishing a connection to the second apparatus through a second-type air interface, or indicates the first apparatus to reselect a first air interface configuration from the first air interface configuration activated via the second indication information. For example, the first field is an air interface indicator (Air Interface indicator) field in the first DCI.

The following describes two possible indication manners of the first field. This application is also applicable to another indication manner. This is not specifically limited in this application.

Implementation 1: At least one first air interface configuration activated via the second indication information includes a first air interface configuration 2, a first air interface configuration 3, and a first air interface configuration 4. A length of the first field is 2 bits. When the value of the first field is 00, it indicates the first apparatus to fall back to establishing a connection to the second apparatus through a second-type air interface. When the value of the first field is 01, it indicates the first air interface configuration 2. When the value of the first field is 10, it indicates the first air interface configuration 3. When the value of the first field is 11, it indicates the first air interface configuration 4.

It should be noted that the values of the first field and the indicated meanings are possible examples, and do not constitute a limitation on the indication manner of the first field. This is not specifically limited in this application.

Implementation 2: A length of the first field is 1 bit. The value of the first field indicates the first apparatus to reselect a first air interface configuration from the first air interface configuration activated via the second indication information. For example, if the value of the first field is 1, it indicates the first apparatus to reselect a first air interface configuration from the first air interface configuration activated via the second indication information. Alternatively, if the value of the first field is 0, it indicates the first apparatus to reselect a first air interface configuration from the first air interface configuration activated via the second indication information. Alternatively, if the value of the first field is opposite to a value of a field that is received by the first apparatus before the first DCI and that indicates to reselect a first air interface configuration, it indicates to reselect a first air interface configuration from the first air interface configuration activated via the second indication information. For example, if the value of the field that is received by the first apparatus before the first DCI and that indicates to reselect a first air interface configuration is 1, and the value of the first field is 0, the first field indicates to reselect a first air interface configuration from the first air interface configuration activated via the second indication information.

Optionally, the first DCI further includes a time/frequency domain resource allocation (Time/frequency domain resource assignment) field, and the time/frequency domain resource allocation field indicates a time-frequency resource location that is occupied by a first-type air interface and that is indicated by the fourth indication information. For example, a length of the time/frequency domain resource allocation field is X bits. X is an integer greater than or equal to 1. For example, X is 1, 2, 3, or 4. Optionally, the time/frequency domain resource allocation field may directly indicate the time-frequency resource location that is occupied by the first-type air interface and that is indicated by the fourth indication information. Alternatively, the time/frequency domain resource allocation field may indicate an offset of the time-frequency resource location that is occupied by the first-type air interface and that is indicated by the fourth indication information relative to a time-frequency resource location occupied by the first-type air interface currently used by the first apparatus.

Optionally, the first DCI further includes a switching time offset (Switching timing offset) field, and the switching time offset field indicates an effective time that is of the first-type air interface and that is indicated by the fourth indication information. For example, a length of the switching time offset field is Y bits, and Y is an integer greater than or equal to 1. For example, Y is 1, 2, or 3.

Optionally, the following describes two possible manners of triggering detecting the first DCI by the first apparatus. This application is also applicable to another trigger manner, and the following implementations do not constitute a limitation on this application.

The following describes a trigger manner 1 with reference to step 803a. Optionally, the embodiment shown in FIG. 8 further includes step 803a. Step 803a may be performed before step 803.

803a: The first apparatus detects the first DCI when the performance of the first-type air interface configured based on the first air interface configuration 1 is less than the first threshold.

In this implementation, when the first apparatus detects that the performance of the first-type air interface configured based on the first air interface configuration 1 is less than the first threshold, the first apparatus detects the first DCI, thereby reducing power consumption of DCI detection of the first apparatus.

The following describes a trigger manner 2 with reference to step 803b and step 803a. Optionally, the embodiment shown in FIG. 8 further includes steps 803b and 803a. Steps 803b and 803a may be performed before step 803.

803b: The second apparatus sends a trigger signal to the first apparatus. The trigger signal is used to trigger the first apparatus to detect the first DCI. Correspondingly, the first apparatus receives the trigger signal from the second apparatus.

Optionally, the second apparatus sends the trigger signal to the first apparatus through a first-type air interface. Correspondingly, the first apparatus receives the trigger signal from the second apparatus through the first-type air interface configured based on the first air interface configuration 1.

Optionally, the second apparatus sends the trigger signal to the first apparatus through a second-type air interface. Correspondingly, the first apparatus receives the trigger signal from the second apparatus through a second-type air interface.

803a: The first apparatus detects the first DCI.

In this implementation, after the first apparatus receives the trigger signal, the first apparatus detects the first DCI, thereby reducing power consumption of DCI detection of the first apparatus.

804: The first apparatus establishes a first-type air interface with the second apparatus based on the first air interface configuration indicated by the fourth indication information, or the first apparatus establishes a second-type air interface with the second apparatus, or the first apparatus establishes a first-type air interface with the second apparatus based on the first air interface configuration reselected by the first apparatus.

For example, the fourth indication information indicates the first air interface configuration, and the first apparatus establishes the first-type air interface with the second apparatus based on the first air interface configuration. An implementation process is similar to that of step 602. For details, refer to the related description of step 602. Details are not described herein again.

For another example, the fourth indication information indicates the first apparatus to fall back to establishing the connection to the second apparatus through the second-type air interface. The first apparatus establishes the second-type air interface with the second apparatus.

For another example, the fourth indication information indicates the first apparatus to reselect a first air interface configuration from the first air interface configuration activated via the second indication information. The first apparatus reselects a first air interface configuration from the first air interface configuration activated via the second indication information, and establishes the first-type air interface with the second apparatus based on the first air interface configuration. An implementation process is similar to that of step 602. For details, refer to the related description of step 602. Details are not described herein again.

In the embodiment shown in FIG. 8, the second apparatus sends the second indication information to the first apparatus. In this way, the second apparatus indicates the at least one first air interface configuration to the first apparatus. The first apparatus establishes the first-type air interface with the second apparatus based on the first air interface configuration 1 in the at least one first air interface configuration. Further, when the performance of the first-type air interface configured based on the first air interface configuration 1 is less than the first threshold, the second apparatus may further reselect a first air interface configuration for the first apparatus based on the fourth indication information, thereby improving performance of transmission between the first apparatus and the second apparatus.

In this application, optionally, each first-type air interface configured based on one or more first air interface configurations includes one or more functional modules. The one or more first air interface configurations include one or more sets of model parameters corresponding to each functional module that is in the one or more functional modules and that is implemented based on AI. For example, one or more sets of model parameters corresponding to each functional module include one or more sets of neural network parameters corresponding to the functional module. Optionally, the one or more first air interface configurations further include one or more sets of related parameters corresponding to each functional module that is in the one or more functional modules and that is implemented based on non-AI. For example, one or more sets of related parameters corresponding to each functional module include one or more sets of conventional signal processing parameters corresponding to the functional module. For example, a set of related parameters corresponding to each functional module includes at least one of the following: a modulation scheme, a modulation order, or a channel coding rate.

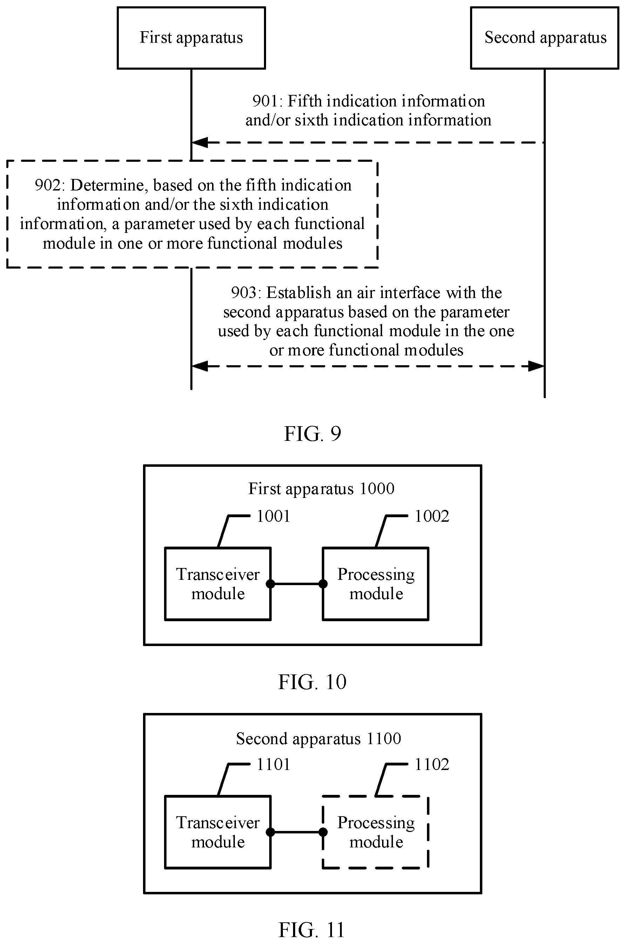

With reference to an embodiment shown in FIG. 9, the following describes a process in which a second apparatus indicates, to a first apparatus, whether each functional module in one or more functional modules is implemented based on AI, and indicates a parameter used by each functional module.

FIG. 9 is a diagram of yet another embodiment of a measurement method according to an embodiment of this application. Refer to FIG. 9. The method includes the following steps.

901: A second apparatus sends fifth indication information and/or sixth indication information to a first apparatus. Correspondingly, the first apparatus receives the fifth indication information and/or the sixth indication information from the second apparatus.

The fifth indication information indicates whether each functional module in the one or more functional modules is implemented based on AI. The sixth indication information indicates the model parameter used by the functional module that is in the one or more functional modules and that is implemented based on AI.

Each first-type air interface includes one or more functional modules, and each functional module may be implemented based on AI or non-AI. Therefore, the second apparatus can flexibly indicate, in step 901, whether each functional module is implemented based on AI. In this way, all functional modules in the first-type air interface are implemented based on AI, or some functional modules in the first-type air interface are implemented based on non-AI.

Optionally, the second apparatus sends the fifth indication information and/or the sixth indication information to the first apparatus through a second-type air interface. Correspondingly, the first apparatus receives the fifth indication information and/or the sixth indication information from the second apparatus through a second-type air interface. Alternatively, the second apparatus sends the fifth indication information and/or the sixth indication information to the first apparatus through a first-type air interface currently used by the second apparatus. Correspondingly, the first apparatus receives the fifth indication information and/or the sixth indication information from the second apparatus through a second-type air interface currently used by the first apparatus.

Optionally, the fifth indication information and the sixth indication information may be separately sent, or may be simultaneously sent. This is not specifically limited in this application.

Optionally, the fifth indication information and the sixth indication information are carried in second DCI.

Optionally, the fifth indication information is a first field in the second DCI. The following describes several possible implementations of the first field. This application is also applicable to another implementation. This is not specifically limited in this application.

Implementation 1: A length of the first field is equal to a quantity M of functional modules in the one or more functional modules. One bit in the first field corresponds to one functional module, and a value of the bit indicates whether a functional module corresponding to the bit is implemented based on AI.

For example, the first field is an activation (Activation) field in the second DCI, and a length of the activation field is 5 bits. As shown in FIG. 4, a 1st bit of the activation field indicates whether a channel decoding module is implemented based on AI, a 2nd bit indicates whether a symbol demodulation module is implemented based on AI, a 3rd bit indicates whether a resource demapping module is implemented based on AI, a 4th bit indicates whether a waveform demodulation module is implemented based on AI, and a 5th bit indicates whether a radio frequency processing module is implemented based on AI. Optionally, when a value of a bit of the activation field is 1, it indicates that a functional module corresponding to the bit is implemented based on AI. When a value of a bit of the activation field is 0, it indicates that a functional module corresponding to the bit is implemented based on non-AI. For example, if a value of the activation field is 11111, it indicates that the channel decoding module, the symbol demodulation module, the resource demapping module, the waveform demodulation module, and the radio frequency processing module are all implemented based on AI. For another example, if a value of the activation field is 10001, it indicates that both the channel decoding module and the radio frequency processing module are implemented based on AI and the symbol demodulation module, the resource demapping module, and the waveform demodulation module are implemented based on non-AI. Alternatively, when a value of one field of the activation field is 0, it indicates that a functional module corresponding to the bit is implemented based on non-AI. When a value of a bit of the activation field is 1, it indicates that a functional module corresponding to the bit is implemented based on AI.

Implementation 2: The one or more functional modules are divided into R module groups, a length of the first field is $P = \lceil \log_2(R) \rceil$, a value of the first field indicates whether a functional module in each module group in the R module groups is implemented based on AI, and R is an integer greater than or equal to 1.

For example, the first field is an activation field in the second DCI. As shown in FIG. 4, the one or more functional modules include a channel decoding module, a symbol demodulation module, a resource demapping module, a waveform demodulation module, and a radio frequency processing module. The channel decoding module, the symbol demodulation module, and the resource demapping module form a module group 1. The channel decoding module, the symbol demodulation module, and the waveform demodulation module form a module group 2. The channel decoding module, the waveform demodulation module, and the radio frequency processing module form a module group 3. That is, R is equal to 3. Therefore, the length of the first field is 2 bits. As shown in Table 5, when the value of the first field is 00, it indicates that, in the module group 1, a functional module is implemented based on AI and another functional module is not implemented based on AI. When the value of the first field is 01, it indicates that, in the module group 2, a functional module is implemented based on AI and another functional module is not implemented based on AI. When the value of the first field is 10, it indicates that, in the module group 3, a functional module is implemented based on AI and another functional module is not implemented based on AI. When the value of the first field is 11, it indicates that all functional modules are implemented based on AI.

Table 5

| Value of a first field | Whether a functional module is implemented based on AI |
| --- | --- |
| 00 | In a module group 1, a functional module is implemented based on AI, and another functional module is not implemented based on AI. |
| 01 | In a module group 2, a functional module is implemented based on AI, and another functional module is not implemented based on AI. |
| 10 | In a module group 3, a functional module is implemented based on AI, and another functional module is not implemented based on AI. |
| 11 | All functional modules are implemented based on AI. |

The foregoing shows two possible implementations of the first field. This application is also applicable to another implementation. This is not specifically limited in this application. For example, the one or more functional modules are divided into R module groups, a length of the first field is R bits, each bit in the R bits corresponds to one module group, and different bits correspond to different module groups. The bit indicates whether a functional module in a module group corresponding to the bit is implemented based on AI. For example, the one or more functional modules include a channel decoding module, a symbol demodulation module, a resource demapping module, a waveform demodulation module, and a radio frequency processing module. The channel decoding module and the symbol demodulation module form a module group 1, the resource demapping module and the waveform demodulation module form a module group 2, and the radio frequency processing module is independently used as a module group 3. Therefore, the length of the first field may be 3 bits. Optionally, when a value of a bit of the first field is 1, it indicates that a functional module in a module group corresponding to the bit is implemented based on AI, or when a value of a bit of the first field is 0, it indicates that a functional module in a module group corresponding to the bit is implemented based on non-AI. Alternatively, when a value of a bit of the first field is 0, it indicates that a functional module in a module group corresponding to the bit is implemented based on non-AI, or when a value of a bit of the first field is 1, it indicates that a functional module in a module group corresponding to the bit is implemented based on AI. For example, when a value of the first field is 111, it indicates that a functional module in the module group 1, a functional module in the module group 2, and a functional module in the module group 3 are all implemented based on AI. For another example, when a value of the first field is 100, it indicates that a functional module in the module group 1 is implemented based on AI, and a functional module in the module group 2 and a functional module in the module group 3 are implemented based on non-AI.

The sixth indication information is a mode index (model index) field in the second DCI, and indicates the model parameter used by the functional module that is in the one or more functional modules and that is implemented based on AI.

Optionally, the sixth indication information further indicates a related parameter used by a functional module that is in the one or more functional modules and that is implemented based on non-AI.

Optionally, the embodiment shown in FIG. 9 further includes step 902 and step 903. Step 902 and step 903 may be performed after step 901.

902: The first apparatus determines, based on the fifth indication information and/or the sixth indication information, a parameter used by each functional module in the one or more functional modules.

903: The first apparatus establishes an air interface with the second apparatus based on the parameter used by each functional module in the one or more functional modules.

Optionally, if at least one functional module in the one or more functional modules is implemented based on AI, the first apparatus establishes a first-type air interface with the second apparatus based on the parameter used by each functional module in the one or more functional modules. If all functional modules in the one or more functional modules are implemented based on non-AI, the first apparatus establishes a second-type air interface with the second apparatus based on the parameter used by each functional module in the one or more functional modules.

It should be noted that, in addition to the implementation shown by the fifth indication information in step 901, optionally, the second apparatus may send seventh indication information to the first apparatus. The seventh indication information indicates whether each functional module in the one or more functional modules is implemented based on AI.

For example, a quantity of bits included in the seventh indication information is $\lceil \log_2(M) \rceil$, and M is the quantity of the one or more functional modules. For example, the one or more functional modules include a channel decoding module, a symbol demodulation module, and a waveform demodulation module. For example, if a value of the seventh indication information is 00, it indicates that each functional module in the one or more functional modules is implemented based on AI. If a value of the seventh indication information is 01, it indicates that, in the one or more functional modules, the channel decoding module is implemented based on AI, and another functional module is implemented based on non-AI. If a value of the seventh indication information is 10, it indicates that, in the one or more functional modules, the symbol demodulation module is implemented based on AI, and another functional module is implemented based on non-AI. If a value of the seventh indication information is 11, it indicates that, in the one or more functional modules, the waveform demodulation module is implemented based on AI, and another functional module is implemented based on non-AI. If the second apparatus needs to indicate that the plurality of functional modules are implemented based on AI, the second apparatus may send a plurality of pieces of seventh indication information to the first apparatus. Each piece of seventh indication information indicates that a corresponding functional module is implemented based on AI.

In the embodiment shown in FIG. 9, the first apparatus receives the fifth indication information and/or the sixth indication information from the second apparatus. The fifth indication information indicates whether each functional module in the one or more functional modules is implemented based on AI. The sixth indication information indicates the model parameter used by the functional module that is in the one or more functional modules and that is implemented based on AI. This helps the first apparatus determine whether each functional module is implemented based on AI and determine a parameter used by each functional module, to establish a corresponding air interface between the first apparatus and the second apparatus. If all the functional modules in the one or more functional modules are implemented based on non-AI, the first apparatus establishes the second-type air interface with the second apparatus. If some or all functional modules in the one or more functional modules are implemented based on AI, the first apparatus establishes the first-type air interface with the second apparatus.

In this application, optionally, control plane information may be transmitted between the first apparatus and the second apparatus through the second-type air interface, for example, a signaling radio bearer 0 (signaling radio bearer, SRB 0), an SRB 1, or an SRB 3. User plane information may be transmitted between the first apparatus and the second apparatus through the first-type air interface, for example, a data radio bearer (data radio bearer, DRB).

The following describes a first apparatus and a second apparatus provided in embodiments of this application.

FIG. 10 is a diagram of a structure of a first apparatus according to an embodiment of this application. Refer to FIG. 10. The first apparatus may be configured to perform processes performed by the first apparatus in the embodiments shown in FIG. 5, FIG. 6, FIG. 8, and FIG. 9. For details, refer to the related descriptions in the foregoing method embodiments.

The first apparatus 1000 includes a transceiver module 1001 and a processing module 1002.

The processing module 1002 is configured to process data. The transceiver module 1001 may implement a corresponding communication function. The transceiver module 1001 may also be referred to as a communication interface or a communication module.

Optionally, the first apparatus 1000 may further include a storage module. The storage module may be configured to store instructions and/or data. The processing module 1002 may read the instructions and/or the data in the storage module, to enable the first apparatus to implement the foregoing method embodiments.

The first apparatus 1000 may be configured to perform an action performed by the first apparatus in the foregoing method embodiments. The first apparatus 1000 may be the first apparatus or a part that may be disposed in the first apparatus. The processing module 1002 is configured to perform a processing-related operation on a first apparatus side in the foregoing method embodiments. The transceiver module 1001 is configured to perform a receiving-related operation on the first apparatus side in the foregoing method embodiments.

Optionally, the transceiver module 1001 may include a sending module and a receiving module. The sending module is configured to perform a sending operation in the foregoing method embodiments. The receiving module is configured to perform a receiving operation in the foregoing method embodiments.

It should be noted that the first apparatus 1000 may include the sending module, but does not include the receiving module. Alternatively, the first apparatus 1000 may include the receiving module, but does not include the sending module. Specifically, this may depend on whether the foregoing solution performed by the first apparatus 1000 includes a sending action and a receiving action.

Optionally, the first apparatus 1000 is configured to perform actions performed by the first apparatus in the embodiments shown in FIG. 5, FIG. 6, FIG. 8, and FIG. 9. For details, refer to the related descriptions in the embodiments shown in FIG. 5, FIG. 6, FIG. 8, and FIG. 9. Details are not described herein again. For example, the first apparatus 1000 is configured to perform the following solution.

The transceiver module 1001 is configured to receive one or more first measurement signals from a second apparatus.

The processing module 1002 is configured to measure the one or more first measurement signals based on one or more first air interface configurations, to obtain one or more first measurement results, where the one or more first measurement results represent performance of a first-type air interface configured based on the one or more first air interface configurations.

The transceiver module 1001 is further configured to send the one or more first measurement results to the second apparatus.

In a possible implementation, each first-type air interface includes one or more functional modules, the one or more functional modules include at least one of the following: a channel decoding module, a symbol demodulation module, a resource demapping module, a waveform demodulation module, a radio frequency processing module, a scheduler module, or an encryption/decryption module, and at least one function mode in the one or more functional modules is implemented based on AI.

In another possible implementation, the one or more first measurement signals correspond to the one or more first air interface configurations, and a first measurement result corresponding to each first measurement signal is obtained through measurement based on a first air interface configuration corresponding to the first measurement signal.

In another possible implementation, the one or more first measurement signals include a first target measurement signal. The processing module 1002 is specifically configured to: receive the first target measurement signal through a first-type air interface configured based on a first air interface configuration corresponding to the first target measurement signal; and determine, based on the first target measurement signal, a first measurement result corresponding to the first target measurement signal.

In another possible implementation, the first measurement result includes a similarity between the first target measurement signal received by the first apparatus and a first target measurement signal preset in the first apparatus 1000, and/or includes a bit error rate of a data packet carried in the first target measurement signal received by the first apparatus.

In another possible implementation, the transceiver module 1001 is further configured to receive one or more pieces of first indication information from the second apparatus, where the one or more pieces of first indication information correspond to the one or more first measurement signals, each piece of first indication information indicates a first air interface configuration corresponding to a first measurement signal corresponding to the first indication information, and the first air interface configuration corresponding to the first measurement signal is used to measure the first measurement signal.

In another possible implementation, the one or more pieces of first indication information are carried in measurement control information.

In another possible implementation, the measurement control information is carried in an RRC message.

In another possible implementation, the transceiver module 1001 is further configured to receive second indication information from the second apparatus, where the second indication information is used to activate at least one first air interface configuration in the one or more first air interface configurations.

In another possible implementation, the at least one first air interface configuration includes a plurality of first air interface configurations, and the second indication information further includes priorities of the plurality of first air interface configurations.

In another possible implementation, the second indication information is carried in a MAC CE.

In another possible implementation, the second indication information is a bit sequence, a bit in the bit sequence corresponds to the one or more first air interface configurations, and a value of the bit in the bit sequence indicates whether to activate the first air interface configuration corresponding to the bit.

In another possible implementation, one bit in the bit sequence corresponds to one first air interface configuration in the one or more first air interface configurations, and different bits in the bit sequence correspond to different first air interface configurations. When a value of a bit in the bit sequence is 0, it indicates that a first air interface configuration corresponding to the bit is in a candidate state; or when a value of a bit in the bit sequence is 1, it indicates that a first air interface configuration corresponding to the bit is in an active state. Alternatively, when a value of a bit in the bit sequence is 0, it indicates that a first air interface configuration corresponding to the bit is in an active state; or when a value of a bit in the bit sequence is 1, it indicates that a first air interface configuration corresponding to the bit is in a candidate state.

In another possible implementation, the at least one first air interface configuration includes a first air interface configuration 1. The transceiver module 1001 is further configured to establish a first-type air interface with the second apparatus based on the first air interface configuration 1.

In another possible implementation, the transceiver module 1001 is further configured to receive a second measurement signal from the second apparatus.

The processing module 1002 is further configured to measure the second measurement result based on a first air interface configuration 2 that is in a candidate state and that is indicated by the second indication information, to obtain a second measurement result, where the second measurement result represents that performance of a first-type air interface configured based on the first air interface configuration 2 is greater than or equal to a first threshold.

The transceiver module 1001 is further configured to: send the second measurement result to the second apparatus; and receive third indication information from the second apparatus, where the third indication information is used to activate the first air interface configuration 2.

The processing module 1002 is further configured to establish a first-type air interface with the second apparatus based on the first air interface configuration 2.

In another possible implementation, the transceiver module 1001 is further configured to receive fourth indication information from the second apparatus, where the fourth indication information indicates one first air interface configuration in the first air interface configuration activated via the second indication information, or the fourth indication information indicates the first apparatus 1000 to establish a connection to the second apparatus through a second-type air interface, or the fourth indication information indicates to reselect a first air interface configuration from the first air interface configuration activated via the second indication information. The processing module 1002 is further configured to: establish a first-type air interface with the second apparatus based on the first air interface configuration indicated by the fourth indication information, or establish a second-type air interface with the second apparatus, or establish a first-type air interface with the second apparatus based on the first air interface configuration reselected by the first apparatus 1000.

In another possible implementation, the fourth indication information is carried in first DCI.

In another possible implementation, the fourth indication information is a first field in the first DCI. A value of the first field indicates a corresponding first air interface configuration, or indicates the first apparatus 1000 to fall back to establishing a connection to the second apparatus through a second-type air interface, or indicates to reselect a first air interface configuration from the first air interface configuration activated via the second indication information.

In another possible implementation, the first DCI further includes a time/frequency domain resource allocation, and the time/frequency domain resource allocation indicates a time-frequency resource location that is occupied by the first-type air interface and that is indicated by the fourth indication information.

In another possible implementation, the first DCI further includes a switching time offset, and the switching time offset indicates an effective time that is of the first-type air interface and that is indicated by the fourth indication information.

In another possible implementation, the processing module 1002 is further configured to detect the first DCI when performance of the first-type air interface configured based on the first air interface configuration 1 is less than the first threshold.

In another possible implementation, the transceiver module 1001 is further configured to receive a trigger signal from the second apparatus, where the trigger signal is used to trigger the first apparatus 1000 to detect the first DCI. The processing module 1002 is further configured to detect the first DCI.

In another possible implementation, each first-type air interface includes one or more functional modules, and the one or more first air interface configurations of the first apparatus 1000 include one or more sets of model parameters corresponding to each functional module that is in the one or more functional modules and that is implemented based on AI.

In another possible implementation, the one or more first air interface configurations of the first apparatus 1000 further include one or more sets of related parameters corresponding to each functional module that is in the one or more functional modules and that is implemented based on non-AI.

In another possible implementation, the transceiver module 1001 is further configured to receive fifth indication information and sixth indication information from the second apparatus, where the fifth indication information indicates whether each functional module in the one or more functional modules is implemented based on AI, and the sixth indication information indicates the model parameter used by the functional module that is in the one or more functional modules and that is implemented based on AI.

In another possible implementation, the fifth indication information and the sixth indication information are carried in second DCI.

In another possible implementation, the fifth indication information is a first field in the second DCI. A length of the first field is equal to a quantity M of functional modules in the one or more functional modules, one bit in the first field corresponds to one functional module, and a value of the bit indicates whether the functional module corresponding to the bit is implemented based on AI.

Alternatively, the one or more functional modules are divided into R module groups, a length of the first field is $P = \lceil \log_2(R) \rceil$, a value of the first field indicates whether a functional module in each module group in the R module groups is implemented based on AI, and R is an integer greater than or equal to 1.

One or more functional modules in the first-type air interface configured based on the one or more first air interface configurations may be implemented by the transceiver module 1001 and/or the processing module 1002.

It should be understood that a specific process in which the modules perform the foregoing corresponding processes has been described in detail in the foregoing method embodiment. For brevity, details are not described herein again.

The processing module 1002 in the foregoing embodiment may be implemented by at least one processor or a processor-related circuit. The transceiver module 1001 may be implemented by a transceiver or a transceiver-related circuit. The transceiver module 1001 may also be referred to as a communication module or a communication interface. The storage module may be implemented by at least one memory.

FIG. 11 is a diagram of a structure of a second apparatus according to an embodiment of this application. Refer to FIG. 11. The second apparatus may be configured to perform processes performed by the second apparatus in the embodiments shown in FIG. 5, FIG. 6, FIG. 8, and FIG. 9. For details, refer to the related descriptions in the foregoing method embodiments.

The second apparatus 1100 includes a transceiver module 1101. Optionally, the second apparatus 1100 further includes a processing module 1102.

The processing module 1102 is configured to process data. The transceiver module 1101 may implement a corresponding communication function. The transceiver module 1101 may also be referred to as a communication interface or a communication module.

Optionally, the second apparatus 1100 may further include a storage module. The storage module may be configured to store instructions and/or data. The processing module 1102 may read the instructions and/or the data in the storage module, to enable the second apparatus to implement the foregoing method embodiments.

The second apparatus 1100 may be configured to perform an action performed by the second apparatus in the foregoing method embodiments. The second apparatus 1100 may be the second apparatus or a part that may be disposed in the second apparatus. The processing module 1102 is configured to perform a processing-related operation on a second apparatus side in the foregoing method embodiments. The transceiver module 1101 is configured to perform a receiving-related operation on the second apparatus side in the foregoing method embodiments.

Optionally, the transceiver module 1101 may include a sending module and a receiving module. The sending module is configured to perform a sending operation in the foregoing method embodiments. The receiving module is configured to perform a receiving operation in the foregoing method embodiments.

It should be noted that the second apparatus 1100 may include the sending module, but does not include the receiving module. Alternatively, the second apparatus 1100 may include the receiving module, but does not include the sending module. Specifically, this may depend on whether the foregoing solution performed by the second apparatus 1100 includes a sending action and a receiving action.

Optionally, the second apparatus 1100 is configured to perform actions performed by the second apparatus in the embodiments shown in FIG. 5, FIG. 6, FIG. 8, and FIG. 9. For details, refer to the related descriptions in the embodiments shown in FIG. 5, FIG. 6, FIG. 8, and FIG. 9. Details are not described herein again. For example, the second apparatus 1100 is configured to perform the following solution.

The transceiver module 1101 is configured to: send one or more first measurement signals to a first apparatus; and receive one or more first measurement results from the first apparatus, where the one or more first measurement results are obtained by measuring the one or more first measurement signals based on one or more first air interface configurations, and the one or more first measurement results represent performance of a first-type air interface configured based on the one or more first air interface configurations.

In a possible implementation, each first-type air interface includes one or more functional modules, the one or more functional modules include at least one of the following: a channel decoding module, a symbol demodulation module, a resource demapping module, a waveform demodulation module, a radio frequency processing module, a scheduler module, or an encryption/decryption module, and at least one function mode in the one or more functional modules is implemented based on AI.

In another possible implementation, the one or more first measurement signals correspond to the one or more first air interface configurations, and a first measurement result corresponding to each first measurement signal is obtained through measurement based on a first air interface configuration corresponding to the first measurement signal.

In another possible implementation, the first measurement result includes a similarity between the first target measurement signal received by the first apparatus and a first target measurement signal pre-agreed on between the first apparatus and the second apparatus, and/or the first measurement result includes a bit error rate of a data packet carried in the first target measurement signal received by the first apparatus.

In another possible implementation, the transceiver module 1101 is further configured to send one or more pieces of first indication information to the first apparatus, where the one or more pieces of first indication information correspond to the one or more first measurement signals, each piece of first indication information indicates a first air interface configuration corresponding to a first measurement signal corresponding to the first indication information, and the first air interface configuration corresponding to the first measurement signal is used to measure the first measurement signal.

In another possible implementation, the one or more pieces of first indication information are carried in measurement control information.

In another possible implementation, the measurement control information is carried in an RRC message.

In another possible implementation, the transceiver module 1101 is further configured to send second indication information to the first apparatus, where the second indication information is used to activate at least one first air interface configuration in the one or more first air interface configurations.

In another possible implementation, the at least one first air interface configuration includes a plurality of first air interface configurations, and the second indication information further includes priorities of the plurality of first air interface configurations.

In another possible implementation, the second indication information is carried in a MAC CE.

In another possible implementation, the second indication information is a bit sequence, a bit in the bit sequence corresponds to the one or more first air interface configurations, and a value of the bit in the bit sequence indicates whether to activate the first air interface configuration corresponding to the bit.

In another possible implementation, one bit in the bit sequence corresponds to one first air interface configuration in the one or more first air interface configurations, and different bits in the bit sequence correspond to different first air interface configurations. When a value of a bit in the bit sequence is 0, it indicates that a first air interface configuration corresponding to the bit is in a candidate state; or when a value of a bit in the bit sequence is 1, it indicates that a first air interface configuration corresponding to the bit is in an active state. Alternatively, when a value of a bit in the bit sequence is 0, it indicates that a first air interface configuration corresponding to the bit is in an active state; or when a value of a bit in the bit sequence is 1, it indicates that a first air interface configuration corresponding to the bit is in a candidate state.

In another possible implementation, the first apparatus establishes a first-type air interface with the second apparatus 1100 based on a first air interface configuration 1 activated via the second indication information. The second apparatus 1100 further includes the processing module. The processing module 1102 is configured to generate a second measurement result based on one first air interface configuration of the second apparatus 1100. The transceiver module 1101 is further configured to: receive the second measurement result from the first apparatus, where the second measurement result is obtained through measurement based on a first air interface configuration 2, and the second measurement result represents that performance of a first-type air interface configured based on the first air interface configuration 2 is greater than or equal to a first threshold; and send third indication information to the first apparatus, where the third indication information is used to activate the first air interface configuration 2.

In another possible implementation, the transceiver module 1101 is further configured to send fourth indication information to the first apparatus, where the fourth indication information indicates one first air interface configuration in the first air interface configuration activated via the second indication information, or the fourth indication information indicates the first apparatus to establish a connection to the second apparatus 1100 through a second-type air interface, or the fourth indication information indicates to reselect a first air interface configuration from the first air interface configuration activated via the second indication information.

In another possible implementation, the fourth indication information is carried in first DCI.

In another possible implementation, the fourth indication information is a first field in the first DCI. A value of the first field indicates a corresponding first air interface configuration, or a value of the first field indicates the first apparatus to fall back to establishing a connection to the second apparatus 1100 through a second-type air interface, or a value of the first field indicates to reselect a first air interface configuration from the first air interface configuration activated via the second indication information.

In another possible implementation, the first DCI further includes a time/frequency domain resource allocation, and the time/frequency domain resource allocation indicates a time-frequency resource location that is occupied by the first-type air interface and that is indicated by the fourth indication information.

In another possible implementation, the first DCI further includes a switching time offset, and the switching time offset indicates an effective time that is of the first-type air interface and that is indicated by the fourth indication information.

In another possible implementation, the transceiver module 1101 is further configured to send a trigger signal to the first apparatus, where the trigger signal is used to trigger the first apparatus to detect the first DCI.

In another possible implementation, each first-type air interface includes one or more functional modules, and the one or more first air interface configurations include one or more sets of model parameters corresponding to each functional module that is in the one or more functional modules and that is implemented based on AI.

In another possible implementation, the one or more first air interface configurations further include one or more sets of related parameters corresponding to each functional module that is in the one or more functional modules and that is implemented based on non-AI.

In another possible implementation, the transceiver module 1101 is further configured to send fifth indication information and/or sixth indication information to the first apparatus, where the fifth indication information indicates whether each functional module in the one or more functional modules is implemented based on AI, and the sixth indication information indicates the model parameter used by the functional module that is in the one or more functional modules and that is implemented based on AI.

In another possible implementation, the fifth indication information and the sixth indication information are carried in second DCI.

In another possible implementation, the fifth indication information is a first field in the second DCI. A length of the first field is equal to a quantity M of functional modules in the one or more functional modules, one bit in the first field corresponds to one functional module, and a value of the bit indicates whether the functional module corresponding to the bit is implemented based on AI.

Alternatively, the one or more functional modules are divided into R module groups, a length of the first field is $P = \lceil \log_2(R) \rceil$, a value of the first field indicates whether a functional module in each module group in the R module groups is implemented based on AI.

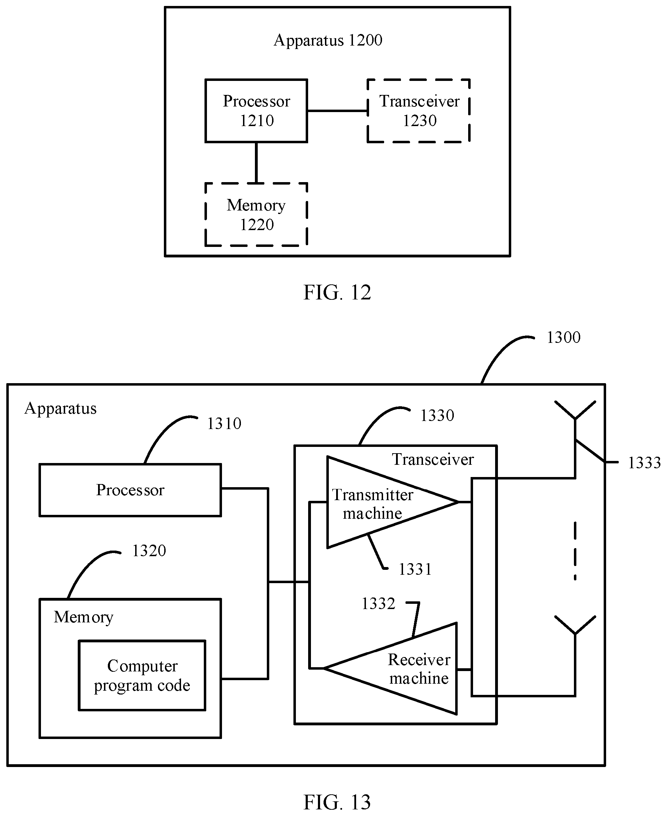

An embodiment of this application further provides an apparatus 1200. Refer to FIG. 12. The apparatus 1200 includes a processor 1210. The processor 1210 is coupled to a memory 1220. The memory 1220 is configured to store a computer program or instructions and/or data. The processor 1210 is configured to execute the computer program or instructions and/or the data stored in the memory 1220, to perform the method in the foregoing method embodiments. The apparatus 1200 is configured to implement an operation performed by the first apparatus or the second apparatus in the foregoing method embodiments.

Optionally, the apparatus 1200 includes one or more processors 1210.

Optionally, as shown in FIG. 12, the apparatus 1200 may further include the memory 1220.

Optionally, the apparatus 1200 includes one or more memories 1220.

Optionally, the memory 1220 and the processor 1210 may be integrated together, or separately disposed.

Optionally, as shown in FIG. 12, the apparatus 1200 may further include a transceiver 1230. The transceiver 1230 is configured to receive and/or send a signal. For example, the processor 1210 is configured to control the transceiver 1230 to receive and/or send the signal.

This application further provides an apparatus 1300. The apparatus 1300 may be a terminal device, a processor of a terminal device, or a chip. The apparatus 130 may be configured to implement an operation performed by the first apparatus or the second apparatus in the foregoing method embodiments.

When the apparatus 1300 is a terminal device, FIG. 13 is a simplified diagram of a structure of the terminal device. As shown in FIG. 13, the terminal device includes a processor, a memory, and a transceiver. The memory may store computer program code. The transceiver includes a transmitter machine 1331, a receiver machine 1332, a radio frequency circuit (not shown in the figure), an antenna 1333, and an input/output apparatus (not shown in the figure).

The processor is mainly configured to: process a communication protocol and communication data, control the terminal device, execute a software program, process data of the software program, and the like.

The memory is mainly configured to store the software program and the data.

The radio frequency circuit is mainly configured to: perform conversion between a baseband signal and a radio frequency signal, and process the radio frequency signal.

The antenna is mainly configured to receive or send a radio frequency signal in a form of an electromagnetic wave.

The input/output apparatus may include a touchscreen, a display, a keyboard, or the like. The input/output apparatus is mainly configured to: receive data input by a user, and output data to the user. It should be noted that some types of terminal devices may have no input/output apparatus.

When needing to send data, after performing baseband processing on the to-be-sent data, the processor outputs a baseband signal to the radio frequency circuit. Then, the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna. The radio frequency circuit converts the radio frequency signal into a baseband signal, and outputs the baseband signal to the processor. The processor converts the baseband signal into data and processes the data. For ease of description, FIG. 13 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending/receiving functions may be considered as a transceiver module of the terminal device, and the processor that has a processing function may be considered as a processing module of the terminal device.

As shown in FIG. 13, the terminal device includes a processor 1310, a memory 1320, and a transceiver 1330. The processor 1310 may also be referred to as a processing unit, a processing board, a processing module, a processing apparatus, or the like. The transceiver 1330 may also be referred to as a transceiver unit, a transceiver machine, a transceiver apparatus, or the like.

Optionally, a component that is in the transceiver 1330 and that is configured to implement a receiving function may be considered as a receiving module, and a component that is in the transceiver 1330 and that is configured to implement a sending function may be considered as a sending module. In other words, the transceiver 1330 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

The processor 1310 is configured to perform a processing action on a first apparatus side or a second apparatus side in the embodiments shown in FIG. 5, FIG. 6, FIG. 8, and FIG. 9. The transceiver 1330 is configured to perform a receiving/sending action on the first apparatus side or the second apparatus side in the embodiments shown in FIG. 5, FIG. 6, FIG. 8, and FIG. 9.

It should be understood that FIG. 13 is merely an example rather than a limitation. The terminal device including the transceiver module and the processing module may not depend on the structure shown in FIG. 10, FIG. 11, or FIG. 13.

When the apparatus 1300 is a chip, the chip includes a processor, a memory, and a transceiver. The transceiver may be an input/output circuit or a communication interface. The processor may be a processing module, a microprocessor, or an integrated circuit integrated on the chip. A sending operation of the first apparatus or the second apparatus in the foregoing method embodiments may be understood as an output of the chip, and a receiving operation of the first apparatus or the second apparatus in the foregoing method embodiments may be understood as an input of the chip.

This application further provides an apparatus 1400. The apparatus 1400 may be a network device or a chip. The apparatus 1400 may be configured to perform an operation performed by the first apparatus or the second apparatus in the embodiments shown in FIG. 5, FIG. 6, FIG. 8, and FIG. 9.

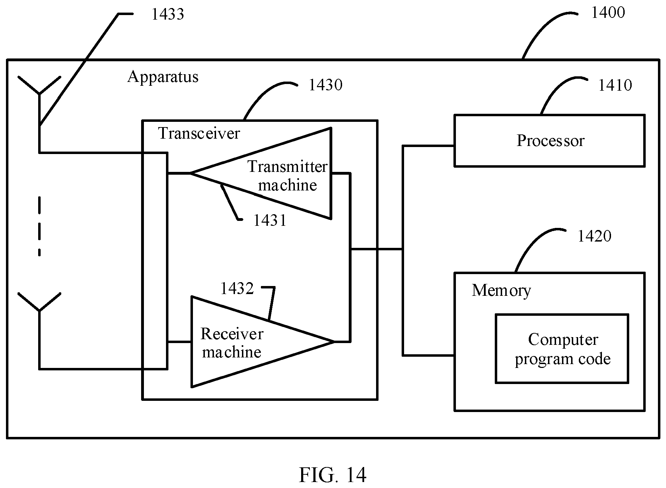

When the apparatus 1400 is a network device, for example, a base station, FIG. 14 is a simplified diagram of a structure of the base station. The base station includes a part 1410, a part 1420, and a part 1430.

The part 1410 is mainly configured to: perform baseband processing, control the base station, and the like. The part 1410 is usually a control center of the base station, may be usually referred to as a processor, and is configured to control the base station to perform a processing operation on a first apparatus side or a second apparatus side in the foregoing method embodiments.

The part 1420 is mainly configured to store computer program code and data.

The part 1430 is mainly configured to: send or receive a radio frequency signal, and perform conversion between the radio frequency signal and a baseband signal. The part 1430 may be usually referred to as a transceiver module, a transceiver machine, a transceiver circuit, a transceiver, or the like. The transceiver module in the part 1430 may also be referred to as a transceiver machine, a transceiver, or the like, and includes an antenna 1433 and a radio frequency circuit (not shown in the figure). The radio frequency circuit is mainly configured to perform radio frequency processing. Optionally, a component configured to implement a receiving function in the part 1430 may be considered as a receiver machine, and a component configured to implement a sending function may be considered as a transmitter machine. In other words, the part 1430 includes the receiver machine 1432 and the transmitter machine 1431. The receiver machine may also be referred to as a receiving module, a receiver, a receiver circuit, or the like, and the transmitter machine may be referred to as a transmitting module, a transmitter, a transmitter circuit, or the like.

The part 1410 and the part 1420 may include one or more boards, and each board may include one or more processors and one or more memories. The processor is configured to read and execute a program in the memory, to implement a baseband processing function and control the base station. If there are a plurality of boards, the boards may be interconnected to enhance a processing capability. In an optional implementation, a plurality of boards may share one or more processors, or a plurality of boards share one or more memories, or a plurality of boards share one or more processors at the same time.

For example, in an implementation, the transceiver module in the part 1430 is configured to perform receiving/sending-related processes performed by the first apparatus or the second apparatus in the embodiments shown in FIG. 5, FIG. 6, FIG. 8, and FIG. 9. The processor in the part 1410 is configured to perform processing-related processes performed by the first apparatus or the second apparatus in the embodiments shown in FIG. 5, FIG. 6, FIG. 8, and FIG. 9.

It should be understood that FIG. 14 is merely an example rather than a limitation. The network device including the processor, the memory, and the transceiver may not depend on the structure shown in FIG. 10, FIG. 11, or FIG. 14.

When the apparatus 1400 is a chip, the chip includes a transceiver, a memory, and a processor. The transceiver may be an input/output circuit or a communication interface. The processor is a processor, a microprocessor, or an integrated circuit integrated on the chip. A sending operation of the first apparatus or the second apparatus in the foregoing method embodiments may be understood as an output of the chip, and a receiving operation of the first apparatus or the second apparatus in the foregoing method embodiments may be understood as an input of the chip.

An embodiment of this application further provides a computer-readable storage medium. The computer-readable storage medium stores computer instructions for implementing the method performed by the first apparatus or the second apparatus in the foregoing method embodiments.

For example, when a computer program is executed by a computer, the computer is enabled to implement the method performed by the first apparatus or the second apparatus in the foregoing method embodiments.

An embodiment of this application further provides a computer program product including instructions. When the instructions are executed by a computer, the computer is enabled to implement the method performed by the first apparatus or the second apparatus in the foregoing method embodiments.

An embodiment of this application further provides a communication system. The communication system includes the first apparatus in the foregoing embodiments and the second apparatus in the foregoing embodiments. The first apparatus is configured to perform some or all operations performed by the first apparatus in the foregoing method embodiments, and the second apparatus is configured to perform some or all operations performed by the second apparatus in the foregoing method embodiments.

An embodiment of this application further provides a chip apparatus, including a processor, configured to invoke a computer program or computer instructions stored in a memory, to enable the processor to perform the methods in the embodiments shown in FIG. 5, FIG. 6, FIG. 8, and FIG. 9.

In a possible implementation, an input of the chip apparatus corresponds to a receiving operation in any one of the embodiments shown in FIG. 5, FIG. 6, FIG. 8, and FIG. 9, and an output of the chip apparatus corresponds to a sending operation in any one of the embodiments shown in FIG. 5, FIG. 6, FIG. 8, and FIG. 9.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution of the method provided in any one of the embodiments shown in FIG. 5, FIG. 6, FIG. 8, and FIG. 9. The memory mentioned anywhere above may be a read-only memory (read-only memory, ROM), another type of static storage device that can store static information and instructions, a random access memory (random access memory, RAM), or the like.

It may be clearly understood by a person skilled in the art that for convenience and brevity of description, for explanation and beneficial effect of related content in any one of the apparatuses provided above, reference may be made to the foregoing corresponding method embodiments. Details are not described herein again.

In the several embodiments provided in this application, it should be understood that the disclosed system, apparatus, and method may be implemented in another manner. For example, the described apparatus embodiments are merely examples. For example, division into the units is merely logic function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the part essentially contributing to the technical solutions of this application or all or some of the technical solutions may be implemented in a form of a software product. The computer software product is stored in a storage medium and includes a plurality of instructions for instructing a computer device (which may be a personal computer, a server, or a network device) to perform all or some of the steps of the methods in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

**Claims**

1. A measurement method, wherein the method comprises:

   receiving, by a first apparatus, one or more first measurement signals from a second apparatus;
   measuring, by the first apparatus, the one or more first measurement signals based on one or more first air interface configurations, to obtain one or more first measurement results, wherein the one or more first measurement results represent performance of a first-type air interface configured based on the one or more first air interface configurations; and
   sending, by the first apparatus, the one or more first measurement results to the second apparatus.

2. A measurement method, wherein the method comprises:

   sending, by a second apparatus, one or more first measurement signals to a first apparatus; and
   receiving, by the second apparatus, one or more first measurement results from the first apparatus, wherein the one or more first measurement results are obtained by measuring the one or more first measurement signals based on one or more first air interface configurations, and the one or more first measurement results represent performance of a first-type air interface configured based on the one or more first air interface configurations.

3. The method according to claim 1 or 2, wherein each first-type air interface comprises one or more functional modules, the one or more functional modules comprise at least one of the following: a channel decoding module, a symbol demodulation module, a resource demapping module, a waveform demodulation module, a radio frequency processing module, a scheduler module, or an encryption/decryption module, and at least one function mode in the one or more functional modules is implemented based on artificial intelligence AI.

4. The method according to any one of claims 1 to 3, wherein the one or more first measurement signals correspond to the one or more first air interface configurations, and a first measurement result corresponding to each first measurement signal is obtained through measurement based on a first air interface configuration corresponding to the first measurement signal.

5. The method according to claim 4, wherein the one or more first measurement signals comprise a first target measurement signal; and measuring, by the first apparatus, the one or more first measurement signals based on the one or more first air interface configurations, to obtain the one or more first measurement results comprises:

   receiving, by the first apparatus, the first target measurement signal through a first-type air interface configured based on a first air interface configuration corresponding to the first target measurement signal; and
   determining, by the first apparatus based on the first target measurement signal, a first measurement result corresponding to the first target measurement signal.

6. The method according to claim 5, wherein the first measurement result comprises a similarity between the first target measurement signal received by the first apparatus and a first target measurement signal pre-agreed on between the first apparatus and the second apparatus, and/or comprises a bit error rate of a data packet carried in the first target measurement signal received by the first apparatus.

7. The method according to any one of claims 1 and 3 to 6, wherein the method further comprises:
   receiving, by the first apparatus, one or more pieces of first indication information from the second apparatus, wherein the one or more pieces of first indication information correspond to the one or more first measurement signals, each piece of first indication information indicates a first air interface configuration corresponding to a first measurement signal corresponding to the first indication information, and the first air interface configuration corresponding to the first measurement signal is used to measure the first measurement signal.

8. The method according to claim 2 or 3, wherein the method further comprises:
sending, by the second apparatus, one or more pieces of first indication information to the first apparatus, wherein the one or more pieces of first indication information correspond to the one or more first measurement signals, each piece of first indication information indicates a first air interface configuration corresponding to a first measurement signal corresponding to the first indication information, and the first air interface configuration corresponding to the first measurement signal is used to measure the first measurement signal.

9. The method according to claim 7 or 8, wherein the one or more pieces of first indication information are carried in measurement control information.

10. The method according to claim 9, wherein the measurement control information is carried in a radio resource control RRC message.

11. The method according to any one of claims 1, 3 to 7, 9, and 10, wherein after sending, by the first apparatus, the one or more first measurement results to the second apparatus, the method further comprises:
receiving, by the first apparatus, second indication information from the second apparatus, wherein the second indication information is used to activate at least one first air interface configuration in the one or more first air interface configurations.

12. The method according to any one of claims 2 to 6 and 8 to 10, wherein the method further comprises:
sending, by the second apparatus, second indication information to the first apparatus, wherein the second indication information is used to activate at least one first air interface configuration in the one or more first air interface configurations.

13. The method according to claim 11 or 12, wherein the at least one first air interface configuration comprises a plurality of first air interface configurations, and the second indication information further comprises priorities of the plurality of first air interface configurations.

14. The method according to any one of claims 11 to 13, wherein the second indication information is carried in a media access control control element MAC CE.

15. The method according to any one of claims 11 to 14, wherein the second indication information is a bit sequence, a bit in the bit sequence corresponds to the one or more first air interface configurations, and a value of the bit in the bit sequence indicates whether to activate the first air interface configuration corresponding to the bit.

16. The method according to claim 15, wherein one bit in the bit sequence corresponds to one first air interface configuration in the one or more first air interface configurations, and different bits in the bit sequence correspond to different first air interface configurations; and

when a value of a bit in the bit sequence is 0, it indicates that a first air interface configuration corresponding to the bit is in a candidate state; or when a value of a bit in the bit sequence is 1, it indicates that a first air interface configuration corresponding to the bit is in an active state; or
when a value of a bit in the bit sequence is 0, it indicates that a first air interface configuration corresponding to the bit is in an active state; or when a value of a bit in the bit sequence is 1, it indicates that a first air interface configuration corresponding to the bit is in a candidate state.

17. The method according to any one of claims 11 and 13 to 16, wherein the at least one first air interface configuration comprises a first air interface configuration 1, and the method further comprises:
establishing, by the first apparatus, a first-type air interface with the second apparatus based on the first air interface configuration 1.

18. The method according to claim 17, wherein the method further comprises:

receiving, by the first apparatus, a second measurement signal from the second apparatus;

measuring, by the first apparatus, the second measurement result based on a first air interface configuration 2 that is in a candidate state and that is indicated by the second indication information, to obtain a second measurement result, wherein the second measurement result represents that performance of a first-type air interface configured based on the first air interface configuration 2 is greater than or equal to a first threshold;

sending, by the first apparatus, the second measurement result to the second apparatus;

receiving, by the first apparatus, third indication information from the second apparatus, wherein the third indication information is used to activate the first air interface configuration 2; and

establishing, by the first apparatus, a first-type air interface with the second apparatus based on the first air interface configuration 2.

19. The method according to any one of claims 11 to 16, wherein the first apparatus establishes a first-type air interface with the second apparatus based on a first air interface configuration 1 activated via the second indication information, and the method further comprises:

generating, by the second apparatus, a second measurement signal;

sending, by the second apparatus, the second measurement signal to the first apparatus;

receiving, by the second apparatus, a second measurement result from the first apparatus, wherein the second measurement result is obtained through measurement based on a first air interface configuration 2, and the second measurement result represents that performance of a first-type air interface configured based on the first air interface configuration 2 is greater than or equal to a first threshold; and

sending, by the second apparatus, third indication information to the first apparatus, wherein the third indication information is used to activate the first air interface configuration 2.

20. The method according to claim 19, wherein the method further comprises:

receiving, by the first apparatus, fourth indication information from the second apparatus, wherein the fourth indication information indicates one first air interface configuration in the first air interface configuration activated via the second indication information, or the fourth indication information indicates the first apparatus to establish a connection to the second apparatus through a second-type air interface, or the fourth indication information indicates to reselect a first air interface configuration from the first air interface configuration activated via the second indication information; and

establishing, by the first apparatus, a first-type air interface with the second apparatus based on the first air interface configuration indicated by the fourth indication information, or establishing, by the first apparatus, a second-type air interface with the second apparatus, or establishing, by the first apparatus, a first-type air interface with the second apparatus based on the first air interface configuration reselected by the first apparatus.

21. The method according to any one of claims 12 to 16, wherein the method further comprises:
sending, by the second apparatus, fourth indication information to the first apparatus, wherein the fourth indication information indicates one first air interface configuration in the first air interface configuration activated via the second indication information, or the fourth indication information indicates the first apparatus to establish a connection to the second apparatus through a second-type air interface, or the fourth indication information indicates to reselect a first air interface configuration from the first air interface configuration activated via the second indication information.

22. The method according to claim 20 or 21, wherein the fourth indication information is carried in first downlink control information DCI.

23. The method according to claim 22, wherein the fourth indication information is a first field in the first DCI, and a value of the first field indicates a corresponding first air interface configuration, or indicates the first apparatus to fall back to establishing a connection to the second apparatus through a second-type air interface, or indicates to reselect a first air interface configuration from the first air interface configuration activated via the second indication information.

24. The method according to claim 22 or 23, wherein the first DCI further comprises a time/frequency domain resource allocation, and the time/frequency domain resource allocation indicates a time-frequency resource location that is occupied by the first-type air interface and that is indicated by the fourth indication information.

25. The method according to any one of claims 22 to 24, wherein the first DCI further comprises a switching time offset, and the switching time offset indicates an effective time that is of the first-type air interface and that is indicated by the fourth indication information.

26. The method according to any one of claims 22 to 25, wherein the method further comprises: detecting, by the first apparatus, the first DCI when performance of the first-type air interface configured based on the first air interface configuration 1 is less than the first threshold.

27. The method according to any one of claims 22 to 25, wherein the method further comprises:

   receiving, by the first apparatus, a trigger signal from the second apparatus, wherein the trigger signal is used to trigger the first apparatus to detect the first DCI; and
   detecting, by the first apparatus, the first DCI.

28. The method according to any one of claims 22 to 25, wherein the method further comprises: sending, by the second apparatus, a trigger signal to the first apparatus, wherein the trigger signal is used to trigger the first apparatus to detect the first DCI.

29. The method according to any one of claims 1 to 10, wherein each first-type air interface comprises one or more functional modules, and the one or more first air interface configurations comprise one or more sets of model parameters corresponding to each functional module that is in the one or more functional modules and that is implemented based on AI.

30. The method according to any one of claims 1 to 10 and 29, wherein the one or more first air interface configurations further comprise one or more sets of related parameters corresponding to each functional module that is in the one or more functional modules and that is implemented based on non-AI.

31. The method according to claim 29 or 30, wherein the method further comprises: receiving, by the first apparatus, fifth indication information and/or sixth indication information from the second apparatus, wherein the fifth indication information indicates whether each functional module in the one or more functional modules is implemented based on AI, and the sixth indication information indicates the model parameter used by the functional module that is in the one or more functional modules and that is implemented based on AI.

32. The method according to claim 29 or 30, wherein the method further comprises: sending, by the second apparatus, fifth indication information and/or sixth indication information to the first apparatus, wherein the fifth indication information indicates whether each functional module in the one or more functional modules is implemented based on AI, and the sixth indication information indicates the model parameter used by the functional module that is in the one or more functional modules and that is implemented based on AI.

33. The method according to claim 31 or 32, wherein the fifth indication information and the sixth indication information are carried in second DCI.

34. The method according to claim 33, wherein the fifth indication information is a first field in the second DCI; and a length of the first field is equal to a quantity M of functional modules in the one or more functional modules, one bit in the first field corresponds to one functional module, and a value of the bit indicates whether the functional module corresponding to the bit is implemented based on AI; or

   the one or more functional modules are divided into R module groups, a length of the first field is $P = \lceil \log_2(R) \rceil$, a value of the first field indicates whether a functional module in each module group in the R module groups is implemented based on AI, and R is an integer greater than or equal to 1.

35. A first apparatus, wherein the first apparatus comprises a transceiver module and a processing module; the transceiver module is configured to perform a receiving/sending operation in the method according to any one of claims 1, 3 to 7, 9 to 11, 13 to 18, 20, 22 to 27, 29 to 31, 33, and 34; and the processing module is configured to perform a processing operation in the method according to any one of claims 1, 3 to 7, 9 to 11, 13 to 18, 20, 22 to 27, 29 to 31, 33, and 34.

36. A second apparatus, wherein the second apparatus comprises a transceiver module; and the transceiver module is configured to perform a receiving/sending operation in the method according to any one of claims 2 to 4, 8 to 10, 12 to 16, 19, 21 to 25, 28 to 30, and 32 to 34.

37. The second apparatus according to claim 36, wherein the second apparatus further comprises a processing module;

and the processing module is configured to perform a processing operation in the method according to any one of claims 2 to 4, 8 to 10, 12 to 16, 19, 21 to 25, 28 to 30, and 32 to 34.

38. An apparatus, wherein the apparatus comprises a processor; and the processor is configured to execute a computer program or computer instructions in a memory, to perform the method according to any one of claims 1 to 34.

39. A computer-readable storage medium, wherein the computer-readable storage medium stores a computer program; and when the computer program is executed by an apparatus, the apparatus is enabled to perform the method according to any one of claims 1 to 34.

40. A communication system, wherein the communication system comprises a first apparatus and a second apparatus; the first apparatus is configured to perform the method according to any one of claims 1, 3 to 7, 9 to 11, 13 to 18, 20, 22 to 27, 29 to 31, 33, and 34; and the second apparatus is configured to perform the method according to any one of claims 2 to 4, 8 to 10, 12 to 16, 19, 21 to 25, 28 to 30, and 32 to 34.

FIG. 1

FIG. 2A

FIG. 2B

FIG. 2C

Neural network 1

Channel coding (Channel coding) module

Symbol modulation module

Resource mapping (Resource Mapping) module

Waveform (Waveform) modulation module

Radio frequency processing (RF processing)

FIG. 3

Neural network 2

Radio frequency processing (RF processing)

Waveform demodulation module

Resource demapping module

Symbol demodulation module

Channel decoding module

FIG. 4

```
┌──────────┐                              ┌──────────┐
│  First   │                              │  Second  │
│apparatus │                              │apparatus │
└────┬─────┘                              └────┬─────┘
     │      501a: Establish a second-          │
     │           type air interface           │
     │<─ ─ ─ ─ ─ ─ ─ ─ ─ ─ ─ ─ ─ ─ ─ ─ ─ ─ ─ ─>│
     │                                         │
     │       501b: One or more pieces of       │
     │         first indication information    │
     │<─ ─ ─ ─ ─ ─ ─ ─ ─ ─ ─ ─ ─ ─ ─ ─ ─ ─ ─ ─ │
     │                                         │
     │        501: One or more first           │
     │           measurement signals           │
     │<────────────────────────────────────────│
     │                                         │
┌────┴──────────────────────────────────┐      │
│   502: Measure the one or more first   │      │
│  measurement signals based on one or   │      │
│ more first-type air interface          │      │
│ configurations of the first apparatus, │      │
│ to obtain one or more first            │      │
│        measurement results             │      │
└────┬──────────────────────────────────┘      │
     │                                         │
     │        503: One or more first           │
     │           measurement results           │
     │────────────────────────────────────────>│
     │                                         │
```

FIG. 5

```
┌──────────────────┐                              ┌──────────────────┐
│                  │                              │     Second       │
│  First apparatus │                              │    apparatus     │
│                  │                              │                  │
└────────┬─────────┘                              └────────┬─────────┘
         │          601: Second indication information      │
         │◄───────────────────────────────────────────────│
         │                                                  │
         │   602: Establish a first-type air interface      │
         │   with the second apparatus based on a           │
         │   first air interface configuration 1            │
         │◄─ ─ ─ ─ ─ ─ ─ ─ ─ ─ ─ ─ ─ ─ ─ ─ ─ ─ ─ ─ ─ ─ ─►│
         │                                                  │
         │        603: Second measurement signal            │
         │◄─ ─ ─ ─ ─ ─ ─ ─ ─ ─ ─ ─ ─ ─ ─ ─ ─ ─ ─ ─ ─ ─ ─│
```

┌ ─ ─ ─ ─ ─ ─ ─ ─ ─ ─ ─ ─ ─ ─ ─ ─ ─ ─ ─ ─ ─ ─ ─ ┐
  604: Measure the second measurement signal based
  on a first air interface configuration 2 that is in a
  candidate state and that is indicated by the second
  indication information, to obtain a second
  measurement result
└ ─ ─ ─ ─ ─ ─ ─ ─ ─ ─ ─ ─ ─ ─ ─ ─ ─ ─ ─ ─ ─ ─ ─ ┘

```
         │         605: Second measurement result            │
         │─ ─ ─ ─ ─ ─ ─ ─ ─ ─ ─ ─ ─ ─ ─ ─ ─ ─ ─ ─ ─ ─ ─►│
         │                                                  │
         │         606: Third indication information         │
         │◄─ ─ ─ ─ ─ ─ ─ ─ ─ ─ ─ ─ ─ ─ ─ ─ ─ ─ ─ ─ ─ ─ ─│
         │                                                  │
         │   607: Establish a first-type air interface       │
         │   with the second apparatus based on the          │
         │   first air interface configuration 2             │
         │◄─ ─ ─ ─ ─ ─ ─ ─ ─ ─ ─ ─ ─ ─ ─ ─ ─ ─ ─ ─ ─ ─ ─►│
         │                                                  │
```

FIG. 6

| First air interface configuration 1 | First air interface configuration 2 | First air interface configuration 3 | First air interface configuration 4 | First air interface configuration 5 | First air interface configuration 6 | First air interface configuration 7 | First air interface configuration 8 |
|---|---|---|---|---|---|---|---|

Oct 1

FIG. 7

First apparatus

Second apparatus

801: Second indication information

802: Establish a first-type air interface
with the second apparatus based on a
first-type air interface configuration 1

803b: Trigger signal

803a: Detect first downlink control
information DCI

803: Fourth indication information

804: Establish a first-type air interface
with the second apparatus based on a
first-type air interface configuration
indicated by fourth indication
information, or establish a second-type
air interface with the second apparatus,
or establish a first-type air interface with
the second apparatus based on a first-
type air interface configuration
reselected by the first apparatus

FIG. 8

First apparatus

Second apparatus

901: Fifth indication information
and/or sixth indication information

902: Determine, based on the fifth indication
information and/or the sixth indication
information, a parameter used by each functional
module in one or more functional modules

903: Establish an air interface with the
second apparatus based on the parameter
used by each functional module in the one
or more functional modules

FIG. 9

First apparatus 1000

1001

1002

Transceiver module

Processing module

FIG. 10

Second apparatus 1100

1101

1102

Transceiver module

Processing module

FIG. 11

FIG. 12

FIG. 13

FIG. 14

## INTERNATIONAL SEARCH REPORT

| International application No. |
|---|
| **PCT/CN2023/114775** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; IEEE: 人工智能, 测量, 信号, 配置, 空口, 类型, 结果, 指示, 模型, 参数, AI, artificial intelligence, measure, signal, configuration, air interface, type, result, indication, model, parameter, DCI, RRC

**C. DOCUMENTS CONSIDERED TO BE RELEVANT**

| Category* | Citation of document, with indication, where appropriate, of the relevant passages | Relevant to claim No. |
|---|---|---|
| X | WO 2022133866 A1 (HUAWEI TECHNOLOGIES CO., LTD.) 30 June 2022 (2022-06-30) description, paragraphs [0038]-[0433] | 1-40 |
| A | CN 115514462 A (HUAWEI TECHNOLOGIES CO., LTD.) 23 December 2022 (2022-12-23) entire document | 1-40 |
| A | CN 114788319 A (HUAWEI TECHNOLOGIES CO., LTD.) 22 July 2022 (2022-07-22) entire document | 1-40 |
| A | CN 107155196 A (HUAWEI TECHNOLOGIES CO., LTD.) 12 September 2017 (2017-09-12) entire document | 1-40 |
| A | WO 2022205023 A1 (HUAWEI TECHNOLOGIES CO., LTD.) 06 October 2022 (2022-10-06) entire document | 1-40 |

☐ Further documents are listed in the continuation of Box C.   ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "D" document cited by the applicant in the international application | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **16 April 2024** | **13 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 770 171 A1**

## INTERNATIONAL SEARCH REPORT
### Information on patent family members

International application No.

**PCT/CN2023/114775**

| Patent document cited in search report | | | Publication date (day/month/year) | Patent family member(s) | Publication date (day/month/year) |
|---|---|---|---|---|---|
| WO | 2022133866 | A1 | 30 June 2022 | None | |
| CN | 115514462 | A | 23 December 2022 | None | |
| CN | 114788319 | A | 22 July 2022 | None | |
| CN | 107155196 | A | 12 September 2017 | None | |
| WO | 2022205023 | A1 | 06 October 2022 | None | |

Form PCT/ISA/210 (patent family annex) (July 2022)

54